# EUROPÄISCHE PATENTANMELDUNG

(11) **EP 3 026 013 A1**
(43) Veröffentlichungstag der Anmeldung: **01.06.2016**
(21) Anmeldenummer: 15196637.1
(22) Anmeldetag: 27.11.2015
(51) Int. Cl.: C01B 21/068, C01B 31/36

(54) **NANOKRISTALLINE METALLVERBINDUNGSPULVER, VERFAHREN ZU DEREN HERSTELLUNG ALS AUCH DEREN VERWENDUNG**

(30) Priorität: 28.11.2014 EP 14195306
(71) Anmelder: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); UEHLENBRUCK, Goswin, 61440 Oberursel (DE)

(57) **Zusammenfassung**

Die Erfindung betrifft höchstreine, nanoskalige, kristalline Metallverbindungspulver umfassend SiC, SiC/Si, SiGe, SiGe/C, Si₃N₄, die optional mit Elektronendonatoren und/oder Elektronenakzeptoren legiert oder beschichtet sein können. Ferner wird ein Verfahren zur Herstellung der Metallverbindungspulver sowie die Verwendung eines Reaktors zur Herstellung der Metallverbindungspulver offenbart. Die erfindungsgemäßen Silicium enthaltenden Metallverbindungspulver können vorzugsweise zur Herstellung von Halbleiterausgangsstoffen, Halbleitern, Thermoelementen zur Energierückgewinnung aus Abwärme, insbesondere von hochtemperaturstabilen Thermoelementen sowie zur Herstellung von Hochtemperatursperrschichten und UV/Vis-transparenten und hochtemperaturstabilen Bauteilen verwendet werden.

## Beschreibung

Die Erfindung betrifft reine, nanokristalline Metallverbindungspulver umfassend SiC, SiC/Si, SiGe, SiGe/C, Si₃N₄, die optional mit Elektronendonatoren und/oder Elektronenakzeptoren legiert und/oder beschichtet sein können. Ferner wird ein Verfahren zur Herstellung der Metallverbindungspulver sowie die Verwendung eines Reaktors zur Herstellung der Metallverbindungspulver offenbart. Die erfindungsgemäßen Silicium enthaltenden Metallverbindungspulver können vorzugsweise zur Herstellung von Halbleiterausgangsstoffen, Halbleitern, Thermoelementen zur Energierückgewinnung aus Abwärme, insbesondere von hochtemperaturstabilen Thermoelementen sowie zur Herstellung von Hochtemperatursperrschichten und optischen Systemen sowie UV/Vis-transparenten und hochtemperaturstabilen Bauteilen verwendet werden.

Siliciumcarbid hat den Trivialnamen Karborund. Siliciumcarbid ist eine zur Gruppe der Carbide gehörende chemische Verbindung aus Silicium und Kohlenstoff mit der chemischen Formel SiC.

Siliciumcarbid findet aufgrund seiner Härte und des hohen Schmelzpunktes Anwendung als Schleifmittel (Carborundum) und als Komponente für Feuerfeststoffe. Anwendung findet es auch als Isolator von Brennelementen in Hochtemperatur-Kernreaktoren oder in Hitzekacheln in der Weltraumtechnik. Ebenso dient es in Mischung mit anderen Materialien als Hartbetonzuschlagsstoff, um Industrieböden abriebfest zu machen. Ringe an hochwertigen Angelruten werden ebenfalls aus SiC gefertigt. In der Ingenieurkeramik stellt SiC aufgrund seiner vielfältigen Eigenschaften - besonders aufgrund seiner Härte - einen der am häufigsten verwendeten Werkstoffe dar.

Generell sind Verfahren zur Herstellung von reinem Siliciumcarbid bekannt. Technisch wird reines Siliciumcarbid bislang nach der modifizierten Lely Methode (J.A. Lely; Darstellung von Einkristallen von Siliciumcarbid und Beherrschung von Art und Menge der eingebauten Verunreinigungen; Berichte der Deutschen Keramischen Gesellschaft e.V.; Aug. 1955; pp. 229-231.) bspw. gemäß US 2004/0231583 A hergestellt. Hierbei werden als Rohstoffe die HP-Gase Monosilan (SiH₄) und Propan (C₃H₈) vorgeschlagen.

In der Solar- und Halbleiterindustrie sowie der LED- und Display-Herstellung besteht ein großer Bedarf an hochreinen Verbindungen, die zur Herstellung und Nutzung der Technologien benötigt werden.

Es ist bekannt, Siliciumcarbid nach dem Acheson-Verfahren aus Siliciumdioxid und Kohlenstoff nach der Reaktionsgleichung SiO₂ + 3C → SiC + 2 CO zu erzeugen. Die dabei erreichbare Qualität ist prozessbedingt gering, und der Energieeintrag hoch.

Siliciumnitrid wird gemäß US-Patent 4,619,905 bei hohen Temperaturen durch Reduktion von Siliciumdioxid mit Kohlenstoff in Anwesenheit von Stickstoff nach der Reaktionsgleichung 3 SiO₂ + 6 C + 2 N₂ →Si₃N₄ + 6 CO gewonnen, wobei die Produkt-Qualität prozessbedingt niedrig ist.

Eine andere, auf Laser basierende Methode zur Herstellung von Siliciumcarbid und Siliciumnitrid mit dem Rohstoff Hexamethyldisilazan wird beschrieben in Yong Liang; Zhengang Wu; Fen Zheng; Quanggang Xian and Zhongchao Feng "Laser synthesis of nano powders of Si-based nitrides and carbides", Proc. SPIE 3550, Laser Processing of Materials and Industrial Applications II, 35 (August 15, 1998); doi:10.1117/12.317900.

Den Prozessen gemeinsam sind hohe Rohstoffkosten, ein hoher Energieeintrag und eine für die vorgenannten technischen Anwendungsfelder nicht ausreichende Reinheit der erhaltenen Produkte.

Vielen der heutigen Industrieapplikationen von Siliciumcarbid sind in der Regel die sehr hohen Reinheitsanforderungen gemeinsam. Daher darf die Verunreinigung der umzusetzenden Silane oder Halogensilane höchstens im Bereich von wenigen mg/kg (ppm-Bereich) und für spätere Anwendungen in der Halbleiterindustrie im Bereich von wenigen µg/kg (ppb-Bereich) liegen.

Aufgabe war die Bereitstellung eines energieeffizienten Verfahrens zur Herstellung von kristallinen Metallverbindungspulvern umfassend Silicium, die erfindungsgemäß kristallin oder polykristallin vorliegen sollen. Aufgabe der Erfindung war die Herstellung von kristallinen, hochreinen bis höchstreinen Silicium enthaltenden Partikeln. Des Weiteren bestand die Aufgabe einen Prozess zu finden, der kontinuierlich oder satzweise hohe Durchsätze der herzustellenden Verbindungen erlaubt. Des Weiteren sollten kristalline Pulver mit definierten Partikelgrößen und definiertem Habitus hergestellt werden, um für eine Kristallisation oder andere Anwendung sehr homogene Pulver herstellen zu können. Eine weitere Aufgabe bestand darin die Partikel darüber hinaus definiert mit Elektronenakzeptoren oder Elektronendonatoren zu versehen und/oder die Partikel mit mindestens einer Beschichtung zu versehen, die das technische Anwendungsprofil der Silicium enthaltenden Partikel deutlich erweitert. So sollen Silicium enthaltende Partikel hergestellt werden, die in Thermoelementen oder in hochtemperaturstabilen Folien, Schichten, Kabelbändern oder Bauteilen umweltfreundliche Verbindungen zum Einsatz kommen können. So soll ein Verfahren entwickelt werden, dass auch ohne die Verwendung von Tetrachlorsilan wirtschaftlich ist.

Des Weiteren sollen spektrale Eigenschaften der Silicium enthaltenden Partikel über die Verteilung der Elektronenakzeptoren und/oder Elektronendonatoen im jeweiligen Partikel und/oder auf den Partikeln einstellbar sein. Beispielsweise sollen die wärmeleitenden Eigenschaften für die Thermoelektrik verringert werden. Alternativ sollen die wärmeleitenden Eigenschaften im Zusammenhang mit einer guten Transparenz verbessert werden, um die Wärme von oder über Displays besser aus elektronischen Geräten abzuleiten. Ferner soll die Transparenz, die Eigenfarbe, die elektrischen Eigenschaften der kristallinen Partikel definiert über das Verfahren und die gewählte Prozessführung einstellbar sein. Das erfindungsgemäße Verfahren soll zu dem energieeffizienter sein als bekannte Verfahren, ferner sollen die nicht umgesetzten Reaktionsprodukte oder die verwendeten inerten Gase ökonomischer wiederverwendet werden können.

Die Aufgabe konnte in überraschender Weise dadurch gelöst werden, dass die oben genannten Siliciumverbindungen durch Umsetzung von Monosilan oder höheren H-Silanen, wie der Formel MeHₙ oder Me₂H₂ₙ₋₂, wobei Me für Silicium und n für eine ganze Zahl steht, Halogensilanen, höheren Halogensilanen oder Alkoxysilanen, wie Tetraethoxysilan, mit C oder N oder Ge enthaltenden Spezies in einem thermischen Prozess, ggf. kombiniert mit einem Plasmaprozess oder in einem reinen Plasmaprozess umgesetzt werden. Höhere H-Silane oder Chlorsilane werden auch als Polysilane oder Polychlorsilane bezeichnet. Die höheren H-Silane, H-/Hal-Silane oder höheren Chlorsilane werden vor Ihrer Umsetzung in die Gasphase überführt. Das Halogen kann ausgewählt sein aus Fluor, Chlor, Brom oder Iod, bevorzugt ist Chlor.

Gelöst werden die Aufgaben durch das erfindungsgemäße Metallverbindungspulver MeX nach Anspruch 1 und das erfindungsgemäße Verfahren nach Anspruch 9 und durch einen Freiraum-Reaktors nach Anspruch 15. Bevorzugte Ausführungsformen sind in den Unteransprüchen und in der Beschreibung erläutert.

Erfindungsgemäß wird ein großtechnisches, industrielles, vorzugsweise kontinuierliches Verfahren zur Herstellung von Metallverbindungspulvern MeX, insbesondere von Siliciumverbindungspulvern, umfassend Submicropartikel und optional Cluster der Submicropartikel in Form von Macropartikeln bereitgestellt, wobei Me Silicium ist und X jeweils unabhängig ausgewählt ist aus Stickstoff, Kohlenstoff und Germanium, wobei X gleich oder unterschiedlich sein kann. X liegt nicht zwingend in einem stöchiometrischen Verhältnis zu Me vor, so kann MeX auch ein SiGe/C sein. Bevorzugte Metallverbindungspulver umfassen Silicium-Verbindungen wie Siliciumcarbid, Siliciumnitrid und/oder Silicium-Germanium-Verbindungen. Die Umsetzung, insbesondere umfassend die Zersetzung und Bildung der Metallverbindungen, kann bei Temperaturen ab 150 °C, bevorzugt ab 1000 bis 3000 °C zur Herstellung kristalliner Pulver erfolgen. Zur Herstellung kristalliner Metallverbindungspulver werden definierte Kontaktzeiten, vorzugsweise bei Temperaturen größer gleich 1300°C, insbesondere größer gleich 1350 °C, bevorzugt größer gleich 1400 °C gewählt. Alternativ kann die Bildung kristalliner Submicropartikel, insbesondere nanokristalliner und vorzugsweise einkristalliner Submicropartikel, bei Temperaturen um 1600 °C bevorzugt kleiner gleich 2900 °C erfolgen. Die Abscheidung der Metallverbindungen als Metallverbindungspulver erfolgt in einer kühleren Zone des Reaktors. Bevorzugte Kontaktzeiten bzw. Verweilzeiten im Verfahren liegen bis 60 bis 4000 Millisekunden, insbesondere größer gleich 150 Millisekunden. Besonders bevorzugt ist eine Kombination aus erhöhter Temperatur und verlängerter Verweilzeit.

So benötigen übliche konventionelle Verfahren, die auf einer Umsetzung von: SiCl4 basieren 30 kW/kg und mehr. Die erfindungsgemäßen Verfahren beruhen vorzugsweise auf einer Umsetzung von Monosilan mit einem Energiebedarf von weniger als 10 kW/kg besonders bevorzugt um 5 kWh/kg. Des Weiteren wird für die Umsetzung im (kalten) Plasma der Energiebedarf weiter reduziert auf kleiner 4 kWh/kg, insbesondere bis ca. 3 kWh/kg.

Bevorzugte Metallverbindungspulver MeX-Pulver umfassend mindestens eine Zone einer MeX-Legierung mit einem Elektronenaktzeptor und/oder Elektronendonator und/oder mindestens eine Zone als Beschichtung der Submicropartikel und/oder Macropartikel mit einer MeX-Legierung. Ebenfalls können die jeweiligen Partikel unabhängig mehrere Zonen und/oder Beschichtungen von MeX-Legierungen aufweisen, wobei optional mindestens eine Beschichtung aus MeX besteht.

Die Aufgaben konnten auch in einer Alternative überraschend gelöst werden durch eine Behandlung im nicht-thermischen Plasma, insbesondere eines nicht-thermischen Plasma erzeugt durch eine Gasentladung, auf einen die erforderlichen Reaktionskomponenten enthaltenden Massestrom erreicht werden.

Gegenstand der Erfindung ist die Erzeugung von hochreinen, gegebenenfalls mit Donatoren oder Akzeptoren legierten Metallverbindungspulvern MeX, d.h. SiX sowie auch die Gewinnung von hochreinen, insbesondere höchstreinen, gegebenenfalls legierten MeX Pulvern durch Reaktion im Plasma.

Die Erfindung betrifft auch ein Verfahren zur Gewinnung von Silicium-Stickstoff-Verbindungen, Silicium-Kohlenstoff-Verbindungen und Silicium-Germanium-Verbindungen, insbesondere in hochreiner Form. Die Erfindung betrifft ferner ein Verfahren zur Gewinnung von reinen, mit (Elektronen-) Donatoren oder (Elektronen-) Akzeptoren legierten und/oder beschichteten Silicium-Stickstoff, Silicium-Kohlenstoff- und Silicium-Germanium-Verbindungen, vorzugsweise werden hochreine Metallverbindungspulver hergestellt, erfindungsgemäß Siliciumverbindungspulver.

Gegenstand der Erfindung ist ein Metallverbindungspulver MeX, wobei Me Silicium ist und X ausgewählt ist aus Stickstoff, Kohlenstoff und Germanium, wobei das Metallverbindungspulver Submicropartikel mit einer Partikelgröße von 5 nm bis 3000 nm aufweisen, besonders bevorzugt. Weitere alternative bevorzugte Partikelgrößen der Submikropartikel liegen im Bereich von 5 bis 200 nm, 20 bis 200 nm, vorzugsweise 20 bis 150 nm, besonders bevorzugt von 30 bis 150 nm, wobei die Submicropartikel im Wesentlichen kristallin sind, und insbesondere mindestens ein Submicropartikel eine Siliciumlegierung mit größer gleich 10²¹ Atomen/cm³ bis 100 % Atomen/cm³ (gleichbedeutend bis 1,1 · 1022 Atomen/cm³ im Fall von Germanium) ausgewählt aus mindestens einem Elektronendonator und Elektronenakzeptor aufweist.

Weiter ist es besonders bevorzugt, wenn die Submicropartikel im Wesentlichen aus einer monokristallinen Phase von MeX bestehen.

Alternativ bevorzugt sind Partikelgrößen der Submicropartikel von 5 bis 10 nm, 20 bis 200 nm, 40 bis 80 nm, 50 bis 200 nm, um 120 nm bis um 150 nm mit einer Schwankungsbreite von +/- 20 nm. Als im Wesentlichen kristallin oder polykristallin gilt ein Pulver mit einer Kristallinität größer gleich 85 %, insbesondere größer gleich 90 %, bevorzugt größer gleich 95 %.

Metallverbindungen MeX weisen jede beliebige Stöchiometrie Me zu X auf, wobei 100 : 1 bis 1 : 100 Me zu X bevorzugt ist, besonders bevorzugt sind 15 : 1 bis 1 : 15, vorzugsweise 10 : 1 bis 1 : 10.

Alternativ bevorzugt sind Partikelgrößen der Submicropartikel von 5 bis 200 nm, 5 bis 10 nm, 20 bis 200 nm, 40 bis 80 nm, 50 bis 200 nm, um 120 nm bis um 150 nm mit einer Schwankungsbreite von +/- 20 nm. Als im Wesentlichen kristallin oder polykristallin gilt ein Pulver mit einer Kristallinität größer gleich 85 %, insbesondere größer gleich 90 %, bevorzugt größer gleich 95 %.

Besonders bevorzugte Metallverbindungspulver umfassen Submicropartikel, die je nach Verfahrensführung definierte Partikelgrößen aufweisen können, wobei besonders bevorzugte Submicropartikelgrößen von 10 bis 200 nm aufweisen, bevorzugt von 20 bis 150 nm, besonders bevorzugt sind Submicropartikelfraktionen mit Partikelgrößen um 30 nm, 40 nm, 50 nm, 60 nm, alternativ um 50 bis 80 nm, 60 bis 200 nm jeweils unabhängig mit einer Abweichung von plus/minus 10 nm, bevorzugt plus/minus 5 nm.

So können bei einer Temperaturführung um 100 bis 500 °C direkt im Anschluss an Zersetzung zur Bildung der Submicropartikel oder im Plasma, vorzugsweise um 500 °C, überwiegend Submicropartikel, insbesondere nicht agglomerierte Submicropartikel, isoliert werden und bei größer 500 °C, insbesondere bei größer gleich 550 °C bis 900 °C +/- 100°C Cluster von Submicropartikeln als Macropartikeln isoliert werden.

Weiter ist es in einer Alternative bevorzugt, wenn die Submicropartikel in Clustern als Macropartikel vorliegen, wobei die Macropartikel eine Partikelgröße von 10 nm bis 6 µm aufweisen, insbesondere 10 nm bis 3 µm, bevorzugt 400 nm bis 6 µm, besonders bevorzugt 100 nm bis 3 µm, vorzugsweise 300 nm bis 3 µm, 500 nm bis 3 µm, 1 bis 3 µm.

Als besonders bevorzugt gelten Metallverbindungspulver in denen weniger als 20 % der Partikel eine Abweichung von der mittleren Korngröße d₅₀ und weniger als 5 % eine Abweichung von größer gleich 50 % von der mittleren Korngröße d₅₀ aufweisen.

Bevorzugt sind weiterhin Pulver umfassend MeX deren Submicropartikel einen mittleren Durchmesser d₅₀ (gemessen durch TEM-Auswertung; TEM = Transmissions-Elektronenmikroskop) im Bereich von 5 bis 200 nm, vorzugsweise von 20 bis 70 nm, aufweisen.

Ob die Teilchen sich sphärisch oder in der Form von Whiskern ausbilden, hängt unter anderem von der H₂-Konzentration bei der Darstellung ab. Je nach Temperaturprofil, Verdünnungsgas (Konzentration, Strömungsgeschwindigkeit) Herstellbedingungen können Submicropartikel isoliert werden oder überwiegend Submicropartikel, die zu Clustern agglomeriert sind, erhalten werden. Als Cluster nach der Erfindung gelten Submicropartikel, die zumindest an einer Stelle miteinander verwachsen sind, wobei ein Submicropartikel an einer Phasengrenze eines anderen Submircopartikels angewachsen sein kann.

Gegenstand der Erfindung sind auch agglomerierte Cluster der Siliciumpulver, die in Form von Macropartikeln vorliegen. Diese Cluster können gebildet werden, indem einzelne kristalline Submicropartikel bei der Herstellung aneinanderwachsen und optional weiterwachsen. Aufgrund der kurzen Kontaktzeiten des erfindungsgemäßen Verfahrens weisen sowohl die isolierten Submicropartikel als auch die in Macropartikeln zu Clustern agglomerierten Submicropartikel im Wesentlichen nur eine kristalline Phase an reinem MeX oder einer MeX-Legierung auf.

So können bei einer Temperaturführung um 100 bis 500 °C direkt im Anschluss an Zersetzung zur Bildung der Submicropartikel oder im Plasma, vorzugsweise um 500 °C, überwiegend Submicropartikel, insbesondere nicht agglomerierte Submicropartikel, isoliert werden und bei größer 500 °C, insbesondere bei größer gleich 550 °C bis 900 °C +/- 100°C Cluster von Submicropartikeln als Macropartikeln isoliert werden.

Weiter ist es in einer Alternative bevorzugt, wenn die Submicropartikel in Clustern als Macropartikel vorliegen, wobei die Macropartikel eine Partikelgröße von 10 nm bis 6 µm aufweisen, insbesondere 10 nm bis 3 µm, bevorzugt 400 nm bis 6 µm, besonders bevorzugt 100 nm bis 3 µm, vorzugsweise 300 nm bis 3 µm, 500 nm bis 3 µm, 1 bis 3 µm.

Die Herstellung erfolgt bevorzugt um 100 °C sowie bei bis zu 700°C +/- 100 °C im kalten Plasma. Das kalte Plasma wird mittels transienter Hochspannungsentladung in einer bipolaren Elektrodenanordnung (Nullpotential, Hochspannungselektrode), die additiv mit einer dielektrischen Barriere ausgestattet sein kann, erzeugt. Die bevorzugten Betriebsparameter für eine planare Elektrodenanordung mit einer Gasschlagweite (GAP) von rund 5 mm sind 15 kVp am Gasraum anliegendes Potential mit einer Impulsdauer von gerundet 750 Nanosekunden und einer Wiederholrate von gerundet 12 000 pro Sekunde. Ein typischer spezifischer Prozessgasflow mit 1 % Monosilan in Argon Matrix liegt gerundet bei 40 cm/s (Volumenflow 2400 cm³/min geteilt durch 1 cm² Elektrodenfläche).

Gegenstand der Erfindung sind auch Siliciumpulver umfassend Submicropartikel mit im Wesentlichen einer monokristallinen, reinen MeX-Phase sowie optional zusätzlich mindestens eine Zone einer Silicium und Bor enthaltenden MeX-Legierung.

Gegenstand der Erfindung sind auch agglomerierte Cluster in Form von Macropartikeln der kristallinen, insbesondere nanokristallinen Metallverbindungspulver.

Gleichfalls werden Metallverbindungspulver beansprucht, deren Submicropartikel Cluster in Form von Macropartikeln ausbilden, in denen mindestens zwei Partikel an ihren Oberflächen aneinander geschmolzen sind. Diese Macropartikel können als lineare Ketten, in Form von Drähten oder auch verzweigt vorliegen.

Ferner werden nach einer Alternative Metallverbindungspulver beansprucht, deren Submicropartikel mit Bor legiert sind, indem sie eine zumindest teilweise oder vollständige Bor enthaltende Beschichtung aufweisen.

Ebenso Gegenstand der Erfindung sind Metallverbindungspulver umfassend Submicropartikel und optional Macropartikel, a) die jeweils unabhängig eine MeX-Legierung mit mindestens einem Elektronendonator oder mindestens einem Elektronenakzeptor mindestens teilweise aufweisen und/oder b) jeweils unabhängig zumindest eine Zone einer MeX-Legierung umfassend einen Elektronendonator, Elektronenakzeptor, eine einen Elektronendonator oder Elektronenakzeptor enthaltenden Verbindung aufweisen, insbesondere liegt die Zone als äußere Beschichtung auf den Submicropartikeln und optional Macropartikeln vor, insbesondere sind die Elektronendonatoren und -akzeptoren ausgewählt aus einem Element der Gruppe 13 oder 15 des Periodensystems (PSE) nach IUPAC Konvention, bevorzugt Bor, Aluminium, Phosphor, Arsen und/oder Antimon. In alternativen Ausführungsformen weisen die Submicropartikel und/oder Macropartikel mehrere Zonen und/oder Beschichtungen von MeX-Legierungen auf. So können die Partikel auch 1 bis 10 Beschichtungen ausgewählt aus von MeX-Legierung, MeX-Dotierung, Silicium, Silicium dotiert umfassen. Alternativ können die Partikel mit Bor beschichtet sein.

Ferner sind Gegenstand der Erfindung Metallverbindungspulver umfassend Submicropartikel und optional Macropartikel eine MeX-Legierung mit einem Element der Gruppe 13 oder 15 PSE IUPAC und/oder umfassend zumindest eine Zone einer MeX-Legierung mit einem Element der Gruppe 13 oder 15, insbesondere sind sie mit einer Zone der MeX-Legierung mindestens teilweise beschichtet, vorzugsweise im Wesentlichen vollständig beschichtet.

Gegenstand der Erfindung sind auch Metallverbindungspulver umfassend a) Submicropartikel bestehend aus einer MeX-Borlegierung, und/oder b) Submicropartikel umfassend mindestens eine Zone einer MeX-Borlegierung, insbesondere liegt die Zone als eine zumindest teilweise Beschichtung der Submicropartikel vor.

Dabei können Verbindungen oder Elemente zur Bildung der MeX-Legierung verwendet werden, die die folgenden Elemente der dritten Hauptgruppe des Periodensystems der Elemente (Gruppe 13 des PSE IUPAC), umfassen, wie Bor, Aluminium, und/oder Elemente der fünften Hauptgruppe (Gruppe 15 des PSE IUPAC ), wie Stickstoff, Phosphor, Arsen, Antimon.

Entsprechend einer Alternative umfassen die Metallverbindungspulver vorzugsweise Partikel, die im Wesentlichen polyedrisch sind, insbesondere oktaderisch sind.

Entsprechend einer weiteren bevorzugten Ausführungsform sind die Partikel der Metallpulver im Wesentlichen nicht porös und weisen daher im Wesentlichen keine innere Oberfläche auf.

Zonen umfassen definierte dreidimensionale Bereiche in den Submicropartikeln, bevorzugt sind Zonen, die dem Kern des Partikels entsprechen und mindestens ein äußerer Bereich des Partikels entspricht einer weiteren äußeren Zone einer abweichenden Zusammensetzung. Der Kern des Submicropartikels kann bis zu 95 Volumen-%, insbesondere bis zu 99,5 Vol.-% des Gesamtsubmicropartikels entsprechen. Die äußere Zone entspricht dann 0,5 bis 5 Vol.-% des Gesamtpartikels des Submicropartikels. Eine zusätzliche Zone kann als mindestens teilweise Beschichtung auf den Macropartikeln vorliegen.

Um die elektrischen Eigenschaften der Metallverbindungspulver auf die jeweilige Anforderung einstellen zu können, ist es bevorzugt, wenn die Partikel Zonen einer MeX-Legierungen als zumindest teilweise oder vollständige Beschichtungen, insbesondere Bor enthaltende Beschichtung aufweisen. Die Schichtdicke der Beschichtung kann 1 nm bis 100 nm, insbesondere 1 bis 20 nm betragen, besonders bevorzugt sind 1 bis 5 und 3 bis 10 nm Bestimmung hochauflösendes TEM.

Bevorzugte Metallverbindungspulver umfassen Partikel der Metallverbindung MeX, insbesondere SiC, SiGe, SiN-Verbindungen, von größer gleich 99 Gew.-% MeX, bevorzugt mit einem Gehalt von größer gleich 99,99 Gew.-%, besonders bevorzugt mit einem Gehalt von größer gleich 99,9999 Gew.-%. Ebenso bevorzugt sind Partikel umfassend Silicium-Stickstoff-, Silicium-Kohlenstoff- und/oder Silicium-Germanium-Verbindungen, wie Siliciumnitrid, Siliciumcarbid, Siliciumcarbid in einer Siliciummatrix, Siliciumcarbid mit Kohlenstoffdomänen, wie Fasern. Die Silicium-Stickstoff-, Silicium-Germanium-, Silicium-Kohlenstoff-Verbindungen können partikulär in einer Matrix von im Wesentlichen reinem Silicium, Germanium, Bor und/oder Kohlenstoff vorliegen. Alternativ können die Silicium-Stickstoff-, Silicium-Germanium-, Silicium-Kohlenstoff-Verbindungen partikulär im Wesentlichen ohne äußere Matrix oder Beschichtung, die auch eine passivierende Oxidschicht, wie SiO₂ (Vor-shell) von typisch 1 nm, umfassen kann, vorliegen. Ferner umfassen die Metallverbindungspulver Partikel, die Siliciumcarbid, Siliciumnitrid, Silicium-Germanium sowie entsprechend mit Bor, Phosphor, Arsen, Antimon und/oder Kohlenstoff etcetera legierte Metallverbindungspulver, insbesondere entsprechend legierte Partikel von SiC, SiC/Si, SiGe, SiGe/C, Si₃N₄ ggf. mit Bor oder Phosphor.

Dabei ist es erfindungsgemäß besonders bevorzugt, wenn die Metallverbindungspulver MeX hochrein sind, insbesondere höchstrein. Als hochrein gilt ein Metallverbindungspulver, wenn MeX mit einem Gehalt größer gleich 99,9999 Gew.-% in der Gesamtzusammensetzung vorliegt, bevorzugt mit einem Gehalt von größer gleich 99,99999 Gew.-%. Als höchstrein gilt ein Metallverbindungspulver mit einem Gehalt von größer gleich 99,999999 Gew.-% von MeX in der Gesamtzusammensetzung.

Die Verunreinigungen in den jeweiligen Edukten und Verfahrensprodukten werden mittels dem Fachmann bekannter Probenaufschlussverfahren bspw. durch Nachweis im ICP-MS oder GD-MS (Analytik für die Bestimmung der Spurenverunreinigung) bestimmt.

Das hochreine bis höchstreine Metallverbindungspulver MeX, insbesondere SiC, SiC/Si, SiGe, SiGe/C, Si₃N₄ enthält vorzugsweise MeX mit einem Gehalt von größer gleich 99,9999 Gew.-%.

Zur Herstellung der hochreinen Metallverbindungspulver wird ein hoch- bis höchstreines Silan, reines- bis hochreines Silan, wobei die Definition von rein bis höchstreines Silan mit Halbleiterqualität verwendet werden, wie monomeres und/oder polymeres Monosilan, H-Silan und/oder teilhalogenierte bis perhalogenierte Silane und/oder Chlorsilan, insbesondere der allgemeinen Formel I, II und/oder III oder eine Mischung dieser, wie höchstreines Tetrachlorsilan, höchstreines Trichlorsilan und/oder höchstreines Dichlorsilan, vorzugsweise mit einem Gehalt an einem Silan von 80 bis 99,9999999 Gew.-%, ad 100 Gew.-% ggf. Polysilane. Alternativ kann statt einem einzelnen Silan auch eine Mischung von Silanen eingesetzt werden, sofern sie dem vorgenannten Anforderungsprofil an den Gehalt des Silans entspricht.

In den erfindungsgemäßen Metallverbindungspulvern weisen die Submicropartikel und optional die Macropartikel umfassend die Submicropartikel in der Gesamtzusammensetzung einen Gehalt von kleiner gleich 2 % Atome/cm³, vorzugsweisen kleiner gleich 2000 ppm-Gew Sauerstoff auf, vorzugweise kleiner gleich 1000 ppm-Gew , insbesondere kleiner 10 ppm-Gew., bevorzugt kleiner gleich 1 ppb-Gew bis zur Nachweisgrenze.

Der Gehalt an Verdünnungsgasen, wie Xenon, Argon, Krypton, oder auch Stickstoff (Ausgenommen bei Metallnitride als Produkt) beträgt in der Gesamtzusammensetzung Metallverbindungspulvern umfassend Submircropartikel und optional Macropartikel kleiner 1% Atome/cm³, insbesondere kleiner gleich 1000 ppm-Gew., 10 ppm-Gew., 1 ppb-Gew, ggf. bis zur Nachweisgrenze. Bei der Herstellung von Metallnitriden ist Stickstoff ein reaktives Gas.

Die Analyse erfolgt neben ICP-MS und HP-GD-MS (High Purity Glow Discharge Mass Spectroskopy) oder bevorzugt mittels Neutronenaktivierungsanalyse (NAA). Die NAA ist eine hochempfindliche physikalische Technik der analytischen Chemie zur qualitativen und quantitativen Spurenanalyse, bei der die zu untersuchende Probe mit Neutronen (oder anderen Teilchen) beschossen wird.

Bei der NAA wird eine Probe von nur wenigen Milligramm (oder Fallweise wenige µg) dem Neutronenstrom (eines Kernreaktors) ausgesetzt. Die Neutronen reagieren mit den Kernen der

Probe und machen aus den stabilen Isotopen radioaktive Isotope, deren Massenzahl eins höher ist als die Massenzahl des stabilen Isotops. Bei diesem ersten Kernprozess wird ein promptes γ - Quant ausgesandt, dessen Energie man messen kann und das Auskunft über den Ausgangskern gibt. In den meisten Untersuchungen wird aber erst der Zerfall des entstandenen radioaktiven Kerns zur Analyse verwendet. Es zerfällt anschließend mit der für ihn typischen Halbwertzeit unter Aussendung eines Betateilchens und charakteristischer Gammastrahlung , die in einem Gammaspektrometer untersucht wird. Auf diese Weise sind praktisch alle vorkommenden Elemente in einer Probe quantitativ und qualitativ nachweisbar. Aus den bekannte Eigenschaften der Atomkerne lassen sich neben den Gehalt der Elemente, sogar ihrer Isotope bestimmen. Die Messungen können bspw. am Berlin Neutron Scattering Center durchgeführt werden.

Die Nachweisgrenzen für die Bestimmung von Xenon (Xe), Argon (Ar), Krypton (Kr), oder auch Stickstoff durch Neutronenaktivierung bei einer Bestrahlzeit von 1 Stunde bei einer sogenannten Flußdichte an thermischen Neutronen von 10¹⁴ cm⁻² s⁻¹ liegen bei ca. 10⁻⁸ g (Ne, Xe), ca. 10⁻⁹ (Kr), ca. 10⁻¹⁰ (Ar) und bei ca. 10⁻⁵ g für Sauerstoff (O₂). Die Nachweisgrenze kann damit insbesondere für kleine Probenmengen kleiner gleich 1000 ppm-Gew., 10 ppm-Gew., 1 ppb-Gew bzw. bis zur Nachweisgrenze, bspw. bis 1 ppt-Gew.betragenGleichfalls bevorzugt sind Gemische von Metallverbindungspulvern a) mit hohem Gehalt an MeX-Legierungen von größer gleich 5 Gew.-% bis 100 Gew.-%, insbesondere 10 bis 50 Gew.-%, mit b) MeX-Legierungen mit einem geringen Gehalt an Siliciumlegierung von kleiner gleich 4 Gew.-% bis 1 ppt.-Gew.%, vorzugsweise kleiner gleich 2 Gew.-% bis 10 ppm.-Gew.%, und optional Metallverbindungspulvern c) die keine MeX-Legierung umfassen und optional dotiert mit den genannten Dotiermitteln dotiert sein können. Das Verhältnis der Metallverbindungspulvern a) zu b) zu c) kann für a : b : c für a 1 bis 1000 für b 1 bis 1000 und für c 0 bis 1000 betragen.

Das reine Metallverbindungspulvern mit einem Gehalt an MeX von größer gleich 95 Gew.-% kann ein Legierungsprofil aufweisen an Bor, Phosphor, Arsen, Aluminium, Eisen, Natrium, Kalium, Nickel, Chrom, Schwefel, Barium, Zirkon, Zink, Titan, Calcium, Magnesium, Kupfer, Chrom, Cobalt, Zink, Vanadium, Mangan und/oder Blei von unter 2 % bis 1 ppb, bevorzugt von 2 % und 0,1 % (Atome/cm³) in Bezug auf die Gesamtzusammensetzung an Metallverbindungspulver.

Entsprechend vorstehender Ausführungen können die Metallverbindungspulver Submicropartikel und optional Cluster der Submicropartikel umfassen, wobei die Metallverbindungspulver MeX vorzugsweise Siliciumcarbid, Siliciumnitrid, Silicium-Germanium enthalten. Alternativ umfassen die Metallverbindungspulver Submicropartikel und optional Cluster der Submicropartikel enthaltend Siliciumcarbid, Siliciumnitrid, Silicium-Germanium, die mit Bor legiert und/oder zumindest teilweise beschichtet sind.

Ebenso Gegenstand der Erfindung sind Metallverbindungspulver, die Submicropartikel und optional Cluster der Submicropartikel in Form von Macropartikeln umfassen, die mit mindestens einem Elektronendonator (n-legierte Halbleiter) und/oder mindestens einem Elektronenakzeptor (p-Halbleiter) dotiert sind. Besonders bevorzugt umfassen die Metallverbindungspulver Submicropartikel und/oder Macropartikel, die mindestens eine Domäne mit einer Kombination einer p-dotiert und eine mindestens eine Domäne mit einer n-dotierten Metallverbindung aufweisen, insbesondere weisen die Submicropartikel und/oder Macropartikel mindestens zwei Domänen mit p- und n-dotierten Metallverbindungen auf. Besonders bevorzugt sind Metallverbindungspulver umfassend Submicropartikel und/oder Macropartikel als mindestens einen Halbleiter, der mindestens einem p-n-Übergang, p-p- und/oder n-n-Übergang aufweist. Bevorzugte Metalle zur Bildung der dotierten Domänen umfassen Phosphor, Arsen, Antimon, Wismut, Bor, Aluminium, Gallium, Indium, Thallium, Europium, Erbium, Cer, Praseodym, Neodym, Samarium, Gadolinium, Terbium, Dysprosium, Holmium, Thulium, Ytterbium, Lutetium, Lithium, Germanium, Eisen, Ruthenium, Osmium, Kobalt, Rhodium, Iridium, Nickel, Palladium, Platin, Kupfer, Silber, Gold, Zink, oder aus einem Gemisch dieser.

Gegenstand der Erfindung sind auch Metallverbindungspulver umfassend Submicropartikel mit im Wesentlichen einer kristallinen Phase einer MeX-Legierung, bspw. einer dotiertem Siliciumlegierung, insbesondere eine Silicium-Germanium-Phase enthaltend, eine Phosphor und/oder Bor enthaltenden MeX-Legierung sowie optional mindestens eine Zone einer Silicium und Germanium (und anderer Halbleitermaterilielaien) sowie Bor oder Phosphor enthaltende Legierung. Bor und Phosphor stehen hier stellvertretend für weitere, dem Fachmann bekannte Dotier-/Legierelemente. Gegenstand der Erfindung sind auch Metallverbindungspulver umfassend Submicropartikel mit im Wesentlichen kristalliner, insbesondere monokristalliner Phase, einer MeX-Legierung, die optional ferner umfasst Siliciumcarbid oder Siliciumnitrid und weitere bspw. Bor enthaltende Legierung(en) sowie optional mindestens eine Zone einer Siliciumcarbid oder Siliciumnitrid und Bor enthaltenden Legierung. Erfindungsgemäße Metallverbindungspulver umfassen vorzugsweise kristallines SiGe, das mindestens eine mit Bor dotierte Domäne und/oder eine Zone einer MeX-Legierung mit Bor umfasst. Dabei kann Bor durch die genannten Akzeptoren oder Donatoren ersetzt werden.

Domänen sind nach der Erfindung dotierte Bereiche der Siliciumpartikel, während die Zonen Bereich von Siliciumlegierungen umfassen.

Entsprechend einer besonders bevorzugten Ausführungsform weist das Metallverbindungspulver, insbesondere die Partikel des Metallverbindungspulvers, thermoelektrische Eigenschaften auf. So können diese MeX Pulver mit thermoelektrischen Eigenschaften vorzugsweise in einem thermoelektrischen Generator verwendet werden.

Entsprechend einer vorzugsweisen Ausführungsform ist das Metallverbindungspulver ein Verbindungshalbleiter. Übliche Thermoelemente aus Metallen wandeln thermische Energie nur sehr ineffizient in elektrische Energie um. Mit den erfindungsgemäßen Partikeln mit thermoelektrischen Eigenschaften können auf einfache und wirtschaftliche Weise thermoelektrische Partikel in einem großtechnischen Verfahren hergestellt werden. Eine wirtschaftliche Funktionszone (Zone), von Oberflächen, die mit heißen Komponenten, Oberflächen, heißen Dämpfen oder Gasen in Kontakt kommen ist mit den erfindungsgemäßen Partikeln oder daraus hergestellten Beschichtungen möglich. Somit gelingt es mit Hilfe der thermoelektrischen Partikel aus Abwärme elektrische Energie zu gewinnen. Besonders bevorzugte Anwendungsfelder bieten Verbrennungsmotoren und die mit den Abgasen in Kontakt kommenden Vorrichtungen, insbesondere deren Oberflächen, Gas- oder Dampfturbinen sowie die damit verbauten Vorrichtungen, Flugzeugturbinen oder auch Batterien, die große Hitze entwickeln.

Zur Verbesserung der thermoelektrischen Eigenschaften der Siliciumpulver können in das Kristallgitter der kristallinen Submicropartikel Schweratome eingebaut werden. Über den gezielten Einbau von Streuzentren kann der Wärmetransport in den Siliciumpulvern reduziert werden. Bevorzugte Metalle als Streuatome umfassen Uran, Wolfram, Wismut, Gallium, Indium, Thallium, Europium, Erbium, Cer, Praseodym, Neodym, Samarium, Gadolinium, Terbium, Dysprosium, Holmium, Thulium, Ytterbium, Lutetium, Eisen, Ruthenium, Osmium, Kobalt, Rhodium, Iridium.

Diese Macropartikel weisen eine moderate Oberfläche und starke Verzweigung auf, so dass der Wärmetransport behindert wird. Das hohe Aspektverhältnis (Länge zu Breite) liegt bei größer 1,5, bevorzugt bei größer gleich 5, besonders bevorzugt bei größer gleich 10 und höher. Besonders bevorzugt weisen die Macropartikel ein Aspektverhältnis von 1 : 10 bis 1 :1000 auf. Diese fadenförmigen Macropartikel zeigen eine richtungsabhängige Wärmeleitfähigkeit. Durch die richtungsabhängige Wärmeleitfähigkeit eigenen sich diese Macropartikel besonders gut für thermoelektrische Anwendungen. Im Temperaturbereich von 300 und 600 °C zeigt das erfindungsgemäße Metallverbindungspulver eine thermoelektrische Gütezahl, abgekürzt "ZT", [RuhrIP1] von über 0,7, die eine verbesserte elektrische Leitfähigkeit bei inhibierter Wärmeleitfähigkeit bedeutet. Die Definition und Messung der thermoelektrischen Gütezahl ist dem Fachmann auf dem Gebiet der Thermoelektrik bekannt. Der Sauerstoffgehalt liegt vorzugsweise unter 10 Gew.-ppm.

Ein so dargestelltes Material, dessen elektrische Leitfähigkeit auf 1000 [S/cm] bei 300°C und deren Wärmeleitfähigkeit auf rund 4 [W/m·K] bei 300°C bestimmt wurden zu einem Seebeck-Koeffizienten von rund 500 Miko-V·K⁻¹ Mikrovolt, aus dem wiederum ein (als sogenannter Thermoelektrischer Performaceparameter) von rund 0,65 bei einer Temperatur von 300°C bestimmt wurde.

Für die Bestimmung des Seebeck Koeffizient und des Elektrischer Widerstands im Temperaturbereich -100 bis 500°C und RT bis 1500°C wird das Gerät der Firma Linseis LSR-3 verwendet. Aus dem Seebeckkoeffizenten kann die Ladungsträgerdichte durch lineare Differenzation gewonnen werden. Mit Hilfe der dem Fachmann bekannten Umrechnung ergibt sich aus Ladungsträgerdichte (cm⁻³) dividiert durch das Integral der Ladungsträger (V*cm/s) die Ladungsträgerbeweglichkeit [cm²/(V·s).]. Ebenso Gegenstand der Erfindung ist ein Verfahren zur Herstellung von Metallverbindungspulver sowie Metallverbindungspulver erhältlich nach diesem Verfahren, indem
a) mindestens eine bei erhöhter Temperatur gasförmige Siliciumverbindung,
b) optional in Gegenwart eines bei erhöhter Temperatur reaktiven Gases, in Gegenwart eines Verdünnungsgases, insbesondere eines unter den Verfahrensbedingungen inerten Verdünnungsgases, in einer im Wesentlichen sauerstofffreien Atmosphäre unter (i) thermischen Bedingungen und/oder (ii) im Plasma zersetzt wird, und in Form eines Metallverbindungspulvers MeX erhalten wird, wobei Me Silicium ist und X jeweils unabhängig ausgewählt ist aus Stickstoff, Kohlenstoff und Germanium, mit Submicropartikel deren Partikelgröße von 5 nm bis 3000 nm liegt, insbesondere werden die Metallverbindungspulver MeX abgeschieden, wobei die Partikel, insbesondere die Submicropartikel, im Wesentlichen kristallin sind, insbesondere nanokristallin.

Ebenso Gegenstand der Erfindung ist ein Verfahren, in dem Metallverbindungspulver, die mindestens einem Submicropartikel aufweisen umfassend eine MeX-Legierung mit größer gleich 10²¹ Atomen/cm³ ausgewählt aus mindestens einem Elektronendonator und Elektronenakzeptor erhalten werden. Vorzugsweise können nach dem Verfahren definierte Gehalte an MeX-Legierung in den Submicropartikeln eingestellt werden, wie vorstehend erläutert. Bevorzugt sind auch monokristalline Submicropartikel bestehend aus einer MeX-Legierung.

Ebenso bevorzugt können nach dem Verfahren Metallverbindungspulver hergestellt werden, in denen mindestens teilweise die Submicropartikel in Clustern als Macropartikel vorliegen. Als dotiertes MeX gelten Submircropartikel, insbesondere MeX Domänen in Submikropartikeln, in denen jeweils unabhängig mindestens ein Elektronendonator oder Elektronenakzeptor zu kleiner gleich 10¹⁷ Atomen/cm³, insbesondere kleiner 10¹⁸ Atomen/cm³, bevorzugt kleiner gleich 10²¹ Atomen/cm³ oder 10²⁰Atomen/cm³ vorliegt. Die erfindungsgemäßen Metallverbindungspulver können neben reinen MeX-Phasen auch Zonen einer MeX-Legierungen und/oder Domäne(n) umfassend dotiertes MeX aufweisen.

Als im Wesentlichen kristallin oder polykristallin gilt ein Pulver mit einer Kristallinität größer gleich 81%. Besonders bevorzugt ist eine Kristallinität von größer gleich 85 %, insbesondere größer gleich 90 %, bevorzugt größer gleich 95 %, besonders bevorzugt von größer gleich 99,9%. Die Kristallinität kann mittels XRD bestimmt werden (Referenzspektrum: size fraction 97% kristallin, 3% amorph (bestimmt durch Einwaage SiO₂ als Referenzspektrum: 97+3%). Alternativ oder zusätzlich kann die Kristallinität mittels XRPD ermittelt werden über die Formel %Kristallinität = (100 x A)/(A + B -C) mit A = gesamte Peakfläche der Reflexe der kristallinen Bestandteilen des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diffraktogramme des Si-Referenzstandards NIST 640 (Si-Standard = 100% Kristallinität) ermittelt. Fläche B entspricht einem eingelegten Untergrundverlauf sowie dem konstanten Untergrund C. Berechnung (HighScore Plus Software). Kristallin: Kristall ist ein anisotroper, homogener Körper, der eine dreidimensional periodische Anordnung der Bausteine besitzt und ein XRPD mit klar definierten auflösbaren Reflexen besitzt.

Ein Kristall ist ein anisotroper, homogener Körper, der eine dreidimensional periodische Anordnung der Bausteine besitzt und ein XRPD mit klar definierten auflösbaren Reflexen besitzt.

Gegenstand der Erfindung ist auch ein Verfahren zur Herstellung der Metallverbindungspulver umfassend mindestens den Schritt Zersetzung (A.1) der Siliciumverbindung, des reaktiven Gases oder einer Mischung dieser umfassend ein Verdünnungsgas unter (i) thermischen Bedingungen und/oder (ii) im Plasma, und Ausbildung von Submicropartikeln und/oder Clustern der Submicropartikel in Form von Macropartikeln innerhalb von 60 bis 4000 Millisekunden, insbesondere nach einer Alternative innerhalb von 60 bis 1000 Millisekunden, vorzugsweise innerhalb von 100 bis 800 Millisekunden, bevorzugt um 600 Millisekunden, vorzugsweise mit plus/minus 50 Millisekunden, und nach einer Alternative innerhalb von 500 bis 1000 Millisekunden, insbesondere innerhalb von 100 bis 500 Millisekunden erfolgt, bevorzugt kleiner gleich 100 bis 600 Millisekunden. Dabei ist es besonders bevorzugt, wenn die Temperatur von 1400 bis 3000°C, vorzugsweise von 1500 bis 3000 °C mit einer Schwankung von plus/minus 50 °C beträgt. Gleichfalls kann das Verfahren bei 1500 bis 2800 °C, bevorzugt von 1600 bis 2700 °C betrieben werden. Die vorstehenden Angaben in Millisekunden entsprechen vorzugsweise der Verweilzeit/ Zeitspanne im Reaktionsraum. Nach einer Verfahrensalternativen kann die Verweilzeit auch die Zeit zur Dotierung und/oder Beschichtung mitumfassen und nach einer anderen Alternative entspricht die Verweilzeit der Zeitspanne ohne Dotierung und/oder Beschichtung der Partikel oder Cluster.

Nach einer Alternative umfasst das Verfahren die Schritte: Zersetzung (A.1) der Siliciumverbindung, des reaktiven Gases oder einer Mischung dieser umfassend ein Verdünnungsgas unter (i) thermischen Bedingungen und/oder (ii) im Plasma, und Ausbildung von Submicropartikeln und/oder Clustern der Submicropartikel in Form von Macropartikeln, und optional Bildung der Legierung und/oder Beschichtung, mit den Schritten: - Ausbildung mindestens einer Zone einer MeX-Legierung (B.1) der sich bildenden Submicropartikel und/oder Cluster der Submicropartikel in Form von Macropartikeln unter (i) thermischen Bedingungen und/oder (ii) in einer Behandlung im Plasma und/oder - Ausbildung einer Beschichtung (C.1) der gebildeten Submicropartikel und/oder Macropartikel, wobei die Submicropartikel und/oder Macropartikel optional mindestens eine legierte Zone umfassen, wobei die Bildung der Beschichtung unter (i) thermischen Bedingungen und/oder in (ii) einer Behandlung im Plasma erfolgt.

Bevorzugt erfolgt die thermische Zersetzung in den Schritten a) eine gasförmige Siliciumverbindung und optional b) mindestens ein reaktives Gas unter (i) thermischen Bedingungen bei einer Temperatur von 1000 bis 3000 °C zersetzt, insbesondere von 1500 bis 2900 °C, vorzugsweise größer gleich 1600 °C. Besonders bevorzugt ist eine Zersetzung bei Temperaturen um 1600 bis 2800 °C, insbesondere innerhalb von 100 bis 1000 Millisekunden, bevorzugt innerhalb von 200 bis 800 Millisekunden, besonders bevorzugt innerhalb von 200 bis 600 Millisekunden, vorzugsweise um 400 Millisekunden. Die Abkühlung zur Abscheidung der Metallverbindungspulver MeX umfassend die Submicropartikel erfolgt vorzugsweise unmittelbar anschließend auf eine Temperatur unter 1000 °C, vorzugsweise unter 800 °C, bevorzugt auf unter 600 °C innerhalb eines Zeitraumes von größer gleich 400 Millisekunden, insbesondere größer gleich 600 Millisekunden, bevorzugt innerhalb größer gleich 800 Millisekunden.

Erfindungsgemäß wird hochreines Monosilan optional in Gegenwart einer C, N, Ge-enthaltenden Verbindung unter thermischen Bedingungen zersetzt. Vorteilhaft kann auch eine Gasphasenabscheidung von Methylsilan optional mit einer vorgenannten Stickstoff, Kohlenstoff und/oder Germanium enthaltenden Verbindung bei 1500 bis 3000 °C erfolgen, bevorzugt um 1500 bis 2700 °C, insbesondere mit einer Abkühlung auf unter 800 °C innerhalb von 'größer gleich 20 Millisekunden.

Besonders bevorzugt ist eine Verfahrensalternative, in der mindestens eine Siliciumverbindung und optional mindestens ein reaktives Gas unter (i) thermischen Bedingungen bei einer Temperatur von 1500 bis 3000 °C zersetzt wird, vorzugsweise von 1500 bis 1800°C, besonders bevorzugt von 1600 °C bis kleiner gleich 1700 °C plus/minus 50 °C, wobei überwiegend kristalline MeX Submicropartikel und optional Cluster der kristallinen Submicropartikel isoliert werden können. Ein bevorzugtes im Verfahren durchlaufenes Temperaturprofil umfasst Temperaturen größer gleich 1500 °C bis kleiner gleich 3500 °C und anschließend kleiner gleich 900 °C. Wobei die Temperatur durchaus um 50 °C schwanken kann. Besonders bevorzugt erfolgt die Zersetzung und Abscheidung in einem Hotwall-Reaktor.

Die Bildung der Metallverbindungspulver kann erfolgen durch 1) Abkühlen der gebildeten Metallverbindung, insbesondere in Gegenwart mindestens eines inerten Verdünnungsgases und/oder 2) die Metallverbindung kann gebildet werden durch ein Inkontaktbringen der zersetzten Siliciumverbindung mit einem kühleren reaktiven Gas unter Bildung und Abkühlen der Metallverbindung, wodurch sich das Metallverbindungspulver abscheidet.

Ferner ist Gegenstand der Erfindung ein Verfahren umfassend vorzugsweise die Schritte (i) thermische Zersetzung zumindest teilweise an einer heißen Innenwand in einem Reaktionsraum und/oder (ii) im Plasma in einem Reaktionsraum in einem Reaktor, insbesondere einem Freiraum Reaktor, umfassend einen Reaktionszylinder, in dem im Bereich des Reaktoranfangs in den Reaktionsraum eines Reaktionszylinders über mindestens eine Zuführung die Siliciumverbindung, optional als Gemisch umfassend das reaktive Gas und/oder das Verdünnungsgas in den Reaktionsraum eingebracht wird, der Reaktionsraum umfasst mindestens eine Reaktionszone, vorzugsweise umfasst der Reaktionsraum eine Vielzahl an definierten Reaktionszonen, in denen die Temperatur definiert einstellbar ist. In mindestens einer Reaktionszone erfolgt die Zersetzung der Siliciumverbindung und optional die Bildung der Metallverbindungspulver, und optional erfolgt eine Legierung und/oder Beschichtung der gebildeten Metallverbindungspulver MeX. Am Reaktorausgang werden die gebildeten Submicropartikel und/oder Cluster in Form von Macropartikeln erhalten insbesondere aus dem Reaktor ausgeschleust.

Dabei ist es bevorzugt, dass die Submicropartikel und/oder Cluster der Submicropartikel in Form von Macropartikeln in einer Vorrichtung zur Partikelabscheidung aufgefangen werden, insbesondere mittels einer gasdurchlässigen Membran.

Verfahrensgemäß kann die Legierung der Submicropartikel und optional der der Cluster von Submicropartikeln in Form von Macropartikeln erfolgen mit a) Elementen der dritten Hauptgruppe des Periodensystems der Elemente (Gruppe 13 des PSE IUPAC), wie Bor, Aluminium, und/oder Elementen der fünften Hauptgruppe (Gruppe 15 des PSE IUPAC), wie Stickstoff, Phosphor, Arsen, Antimon, bevorzugt kann eine Legierung durch Zusatz von Diboran erfolgen, und/oder es kann eine Modifizierung der Submicropartikel und optional der Cluster erfolgen b) zumindest teilweise mit mindestens einem organofunktionellen Silan.

Gemäß einer weiteren bevorzugten Verfahrensalternative umfasst das reaktive Gas
a) Stickstoff enthaltende Verbindungen, wie Stickstoff, NH₃, Alkylamine, Germanium enthaltende Verbindungen, Kohlenwasserstoffe, wie Methan, Butan und/oder Propan und optional umfasst das mindestens eine reaktive Gas zusätzlich
b) Legierungsgase umfassend Verbindungen der Elemente der Gruppe 13 oder 15, insbesondere Bor enthaltende Verbindungen, wie Diboran, bevorzugt Bor, Aluminium, Phosphor, Arsen und/oder Antimon.

Besonders bevorzugt umfasst das erfindungsgemäße Verfahren zur Herstellung der Metallverbindungspulver mindestens den Schritt: Zersetzung (A) der Siliciumverbindung, des reaktiven Gases, des Legierungsgases oder einer Mischung dieser umfassend ein Verdünnungsgas unter (i) thermischen Bedingungen und/oder (ii) im Plasma, und Ausbildung von Submicropartikeln und/oder Clustern der Submicropartikel in Form von Macropartikeln innerhalb von 60 bis 4000 Millisekunden.

Besonders bevorzugte Abkühlungsbedingungen werden nachfolgend näher erläutert. Wie vorstehend ausgeführt kann die Bildung der Pulver auf zweierleiweise erfolgen, so kann die Abkühlung und Ausbildung der Metallverbindungspulver durch Quenchen mit kühlen reaktiven Gasen, insbesondere flüssigem Stickstoff oder einem anderen sich hier inert verhaltenem Gas/Element oder Verbindung erfolgen ggf. mit einem Gehalt an verdampfenden Kohlenwasserstoffen, Bor-, Phosphor-Verbindungen und/oder Verbindungen der Elemente der dritten Hauptgruppe des Periodensystems der Elemente (Gruppe 13 des PSE IUPAC), wie Bor, Aluminium, und/oder Elemente der fünften Hauptgruppe (Gruppe 15 des PSE IUPAC), wie Stickstoff, Phosphor, Arsen, Antimon. Die erfolgt aus dem Grunde um die Gitterkonstanten des nanokristallinen Produktes zu verändern, woraus sich bspw. durch Germaniumeinbau eine Erhöhung der Beweglichkeit der Ladungsträger ergibt.

Die Abkühlung der Siliciumpulver kann neben dem physikalischen Qenchen im Millimeter, bevorzugt im Mikrometerspalt zweier rotierender Metallwalzen auch erfolgen.

Abkühlung der Metallverbindungen in einer kühleren Region des Reaktors, die vorzugsweise eine Temperatur im Bereich kleiner gleich 1400 °C aufweist. Eine Abkühlung kann auch durch ein Einleiten in inerte, kühle und leicht verdampfbare Flüssigkeiten oder durch Einleiten in flüssige, Silicium oder Bor enthaltende Verbindungen erfolgen. Generell können die Metallverbindungen abgekühlt werden, indem sie in eine Zone des Reaktors oder Reaktionszone geleitet werden, dessen Temperatur deutlich unterhalb 1000 °C liegt, vorzugsweise unter 900 °C, weiter bevorzugt unterhalb 800 °C, besonders bevorzugt unterhalb 600 °C. Besonders bevorzugt erfolgt ein definiertes Abkühlen durch Einstellen einer Temperaturdifferenz von größer gleich 500 °C, insbesondere größer gleich 200 °C, bevorzugt von größer gleich 100 °C, besonders bevorzugt größer gleich 50 °C unterhalb des jeweiligen Schmelzpunktes der Metallverbindung MeX, innerhalb eine definierten Zeitraumes von größer gleich 100 Millisekunden, um im Wesentlichen kristalline Metallverbindungspulver zu erhalten.

Um im Wesentlichen kristalline Metallverbindungspulver zu erhalten, erfolgt vorzugsweise eine langsame Abkühlung indem innerhalb einer längeren Zeit eine definierte Temperaturerniedrigung erfolgt. So kann die Zone zur Zersetzung und/oder Legierung eine Temperatur von 1500 bis 3000 °C aufweisen, während die Abscheidung und optional Beschichtung bei -298 °C bis kleiner gleich 1400 °C, vorzugsweise unter 200 °C erfolgt.

Besonders effizient zur Herstellung kristalliner, beschichteter Partikel ist eine Verfahrensführung analog der Sprühtrocknung, in dem mit einem starken Druckabfall von bspw. 1 bar aus auf 200 mbar(abs), gearbeitet wird, die kristallinen Metallverbindungspulver bspw. Silicium-Germaniumpartikel optional in Gegenwart eines Verdünnungsgases gearbeitet mit einem reaktiven Gas zur Reaktion gebracht werden, um eine in der Zone einer MeX-legierung auf die Partikel und optional auf die Cluster aufzubringen.

Im Rahmen der Erfindung gilt für die Einheit des Druckes 1 bar = 1000 hPa.

Alternativ können die kristallinen Submicropartikel erhalten werden in einem nicht-thermische Plasma, dessen Temperaturen bei kleiner gleich 1800 °C, vorzugsweise kleiner gleich 900 °C liegen. Erfindungsgemäß bevorzugt umfasst das Plasma die Bedingungen einer Gasentladung, insbesondere im nicht-thermischen Gleichgewicht mit einer nachgeschalteten Verweilzeitstrecke bei hoher Temperatur als Temperstrecke. Das Partikelwachstum erfolgt als Kondensation aus einer übersättigten Phase durch Zersetzung des entsprechenden Precursoren im Plasma. Erfindungsgemäß bevorzugt umfasst das Plasma die Bedingungen einer Gasentladung, insbesondere im nicht-thermischen Plasma.

Erfindungsgemäß eingesetzte nicht-thermische Plasmen werden beispielsweise durch eine Gasentladung oder durch Einstrahlung von elektromagnetischer Energie, wie durch Einstrahlung von Radio- oder Mikrowellen, in einer Unterdruckkammer erzeugt. Die Erzeugung des Plasmas erfolgt also nicht wie bei thermischen Plasmen durch hohe Temperaturen, sondern durch nicht-thermische Ionisationsprozesse. Dem Fachmann sind solche Plasmen bekannt.

Für die vorstehend aufgeführten Verfahren wurden im nichtthermischen Gleichgewicht betriebene Gasentladungen verwendet. Nichtthermisch bedeutet im erfinderischen Sinne, dass die Elektronen als energievermittelnde Spezies eine höhere Temperatur und/oder eine höhere Energie als die Schwerteilchen, beispielsweise Xe, Ar, XeAr, Xe₂, N₂, N₂⁺, Kr, Si, SiH, SiH₂⁺, C, H, H₂, N, NH und andere dem Fachmann bekannte Schwerteilchen, aufweisen. Diese wurden durch dem Fachmann bekannte bzw. geläufige Netzteile erzeugt. Das nicht-thermische Plasma weist im Allgemeinen Elektronen mit einer Energie im Bereich von 0,1 bis 100 eV, insbesondere von 1 bis 50 eV, auf und Schwerteilchen mit einer Energie im Bereich von 1 bis 10 eV, insbesondere 0,5 bis 1 eV. Elektrodenabstand 4 mm.

Überraschenderweise hat sich gezeigt, dass sich eine solche nicht-thermische Gasentladung vorteilhaft durch Dimmen über die Pulsfrequenz bzw. durch Pulsweitenmodulation erzeugen lässt, wobei vorteilhafterweise die Elektroden als Hohlelektroden mit vorzugsweise porösen Stirnflächen bspw. aus Sintermetall durch eine zweidimensionale parabolische Form ausgeführt sind. Damit verteilt sich der 15 Gasstrom gleichmäßig über die Elektrodenoberfläche. Die zweidimensionale pilzartige Oberfläche kann gemäß F(r) = r2 (0,1< r < 1,1cm) beschrieben werden. Das erfindungsgemäße Verfahren wird im Allgemeinen in nicht-thermischen Plasmen durchgeführt, welche Schwerteilchen-Temperaturen von -250°C bis 2400 °C, vorzugsweise von 100 bis 1400 °C aufweisen.

Das Plasma kann gepulst werden, vorzugsweise wird ein im Wesentlichen zylinderförmiges Plasma, insbesondere nicht-thermisches Plasma, in einem zylindrischen Bereich des Reaktionszylinders vorgesehen, in dem eine vorteilhaft homogene Legierung und/oder Beschichtung mit Zersetzungsprodukten aus einem reaktiven Gas oder Gemisch von Gasen, der oberhalb im Reaktionszylinder gebildeten partikelförmigen Metallverbindungen erfolgt.

Völlig überraschend wurde festgestellt, dass die Teilchengröße nicht nur durch den Wasserstoffgehalt, sondern auch durch gezielte Zugabe und Vermischen mit Stickstoff eingestellt werden kann. Im Fall der Nitride erscheint der Stickstoff den Zerfall von Siliciumnitrid-Vorläufern, wie SiN, bei hohen Temperaturen, insbesondere über 1700 °C, vorzugsweise bei Temperaturen oberhalb von 2050 °C, kinetisch zu hemmen. Demgegenüber kann bei der Herstellung von Carbiden durch eine Fahrweise bei hohen Temperaturen, im Falle von Silicium bei Temperaturen über 1750 °C, verhindert werden, dass Stickstoff im Festkörper eingebaut wird.

Eine weitere bevorzugte Ausführungsform des erfindungsgemäßen Verfahrens beinhaltet das Einleiten von Stickstoff in das nicht-thermische Plasma, das insbesondere Temperaturen von über 1700 °C, vorzugsweise von über 2050 °C aufweist. Natürlich kann mit niedereren Temperaturen bei den Synthesen im Plasma gearbeitet werden. Dabei wird zweckmäßig ein Inertgas, beispielsweise ein Edelgas oder eine Mischung von Edelgasen, z.B. Argon mit geringen Anteilen an Helium, verwendet. Andere Gasmischungen sind dem Fachmann bekannt oder können einschlägigen Lehrbüchern entnommen werden.

Eine weitere bevorzugte Ausführungsform des erfindungsgemäßen Verfahrens beinhaltet das Einleiten von Edelgas oder von Edelgasgemischen als Verdünnungsgas in das nicht-thermische Plasma, das insbesondere Temperaturen von größer gleich 1500 °C, vorzugsweise größer gleich 1300 °C aufweist.

Ein besonderer Vorteil des erfindungsgemäßen Verfahrens ist die effiziente Abtrennung der Partikel von gasförmigen Komponenten, wie dem Verdünnungsgas oder nicht umgesetzten reaktiven Gasen. So erfolgt vorzugsweise die Abtrennung der Partikel, indem diese durch eine gasdurchlässige Membran aufgefangen werden. So können die Partikel optional kontinuierlich oder diskontinuierlich über eine abschüssig angeordnete Membran abgetrennt werden. Das Verdünnungsgas kann mithilfe der Membran abgetrennt und erneut verwendet werden.

In dem Verfahren nach der Erfindung werden vorzugsweise bei erhöhter Temperatur gasförmige Siliciumverbindungen umgesetzt, umfassend Wasserstoff- und/oder Halogen-enthaltende Silane, wie H-Silane, Halogensilane, und/oder Kohlenwasserstoff-enthaltende Silane, wie Methylsilan, Methyltrichlorsilan, Dimethyldichlorsilan, Halogensilane, Chlorsilane sowie reine, hochreine, insbesondere höchstreine H-Silane, wie Monosilan und/oder Chlorsilane, wie Dichlorsilan, Trichlorsilan, Tetrachlorsilan, Hexachlordisilan, Oktachlortrisilan, Polyhalogensilane, und weitere dem Fachmann bekannte Silane, sowie Wasserstoff enthaltende Polysilane, umfassend ausschließlich Wasserstoff oder Wasserstoff und Halogen. Zur Herstellung der kristallinen Metallverbindungspulver können gleichfalls Methyltrichlorsilan, Alkoxsilane, vorzugsweise Tetramethoxysilan, Tetraethoxysilan oder gemischte Tetraalkoxysilane eingesetzt werden.

Vorzugsweise beträgt der Gehalt an Silanen, insbesondere an monomeren und/oder Polysilanen, bevorzug an Polychlorsilanen und/oder Polyperchlorsilangemische größer gleich 98 Gew.-% bis 99,9999999 Gew.-%, mit kleiner gleich 100 Gew.-% bis 0,001 Gew.-ppt Gesamtverunreinigungen in einem hochreinen Silan, vorzugsweise kleiner 50 Gew.-ppm bis 0,001 Gew.-ppt in einem höchstreinen Silan, und ggf. ad 100 Gew.-% Polysilane.

Erfindungsgemäß einsetzbare Silane umfassen Silane der allgemeinen Formel I,

HₓSiCl₄₋ₓ (I)

mit x unabhängig voneinander ausgewählt aus 0, 1, 2 oder 3, vorzugsweise ist x gleich 0, 1 oder 2, bevorzugt ist x gleich 0 oder 1, besonders bevorzugt ist x gleich 0, oder ein Gemisch umfassend mindestens zwei monomere Chlorsilane der Formel I, insbesondere ausgewählt aus Tetrachlorsilan, Trichlorsilan und Dichlorsilan, bevorzugt reines Tetrachlorsilan oder reines Tetrachlorsilan mit einem Gehalt an Trichlorsilan und/oder Dichlorsilan.

Bevorzugt können auch Polyperchlorsilangemische umfassend Polyperchlorsilane mit 2 bis 8 Siliciumatomen eingesetzt werden. Besonders bevorzugt ist auch die Herstellung höhermolekularer Polychlorsilane mit mindestens drei Siliciumatomen, insbesondere mit 3 bis 8 Siliciumatomen. Zur Bestimmung der Gesamtverunreinigung mit den vorgenannten Elementen erfolgt vorzugsweise mittels ICP-MS.

Bevorzugt sind Polyperchlorsilangemische umfassend Polyperchlorsilane mit 2 bis 8 Siliciumatomen. Besonders bevorzugt ist auch die Herstellung höhermolekularer Polychlorsilane mit mindestens drei Siliciumatomen, insbesondere mit 3 bis 8 Siliciumatomen.

Polychlorsilane entsprechend der Erfindung umfassen die homologe Reihe der Polyperchlorsilane der allgemeinen Formel II SiₙCl₂ₙ₊₂, mit n grösser gleich 2, welche lineare und/oder verzweigte Ketten bilden sowie die Polyperchlorsilane, die Ringe oder Polymere bilden, wobei die Polymere auch verzweigt und/oder cyclisch sein können, mit der idealisierten Formel III SiₙCl₂ₙ , mit n grösser gleich 3, als auch die Siliciumchloride mit geringerem Chlorgehalt der idealisierten Formel IV SiCl_{1,5}.

Besonders bevorzugt gelten als Polychlorsilane Verbindungen der allgemeinen Formel II SiₙCl₂ₙ₊₂, mit n grösser gleich 2, insbesondere mit n grösser gleich 2 bis 100, vorzugsweise mit n grösser gleich 2 bis 50, vorzugsweise jeweils unabhängig mit n grösser gleich 2, 3, 4, 5, 6, 7, 8, 9 oder 10, bevorzugt 2 bis 8, besonders bevorzugt mit n gleich 2 oder 3, wobei sie lineare als auch verzweigte Ketten bilden können; und Verbindungen der allgemeinen Formel III, die Ringe oder Polymere bilden mit SiₙCl₂ₙ, mit n grösser gleich 3, insbesondere mit n grösser gleich 4 bis 100, insbesondere mit n grösser gleich 4 bis 50, besonders bevorzugt jeweils unabhängig mit n grösser gleich 4, 5, 6, 7, 8, 9 oder 10, als auch Polychlorsilane mit geringerem Chlorgehalt gemäss der allgemeinen Formel IV mit SiₙCl_{1,5n}, mit n grösser gleich 4 oder 5, insbesondere mit n grösser gleich 6 bis 200, vorzugsweise mit n grösser gleich 8 bis 100.

Besonders bevorzugt wird ein Polychlorsilan (PCS) eingesetzt, insbesondere Octachlortrisilan oder ein Octachlortrisilan in einer Mischung mit höhermolekularen Polychlorsilanen, vorzugsweise Polyperchlorsilanen, wobei das Polychlorsilan insbesondere einen Gehalt an Octachlortrisilan von 20 bis 99,9999 Gew.-% aufweist, vorteilhaft mit einem vorgenannten Verunreinigungsprofil.

Es kann auch ein gelöstes Polysilan und/oder Polychlorsilan beispielsweise in einem reaktiven Lösemittel, wie Kohlenwasserstoff als Flüssigkeit, Sirup, Paste, Creme, Dispersion, Emulsion, eingesetzt werden, wobei das hochreine Lösemittel vor der Zersetzung zu einem reaktiven Gas verdampft oder als Aerosol in den Reaktor eingebracht wird. Somit gelten auch reaktive verdampfbare Lösemittel als reaktive Gase.

Vorzugsweise wird in dem Verfahren ein inertes Verdünnungsgas verwendet. Je nach Anforderungsprofil kann auf das Verdünnungsgas verzichtet werden, wenn zugleich ein Vakuum anliegt. Bevorzugte Verdünnungsgase sind Argon, Helium, Xenon, Krypton oder ein Gemisch umfassend mindestens zwei der genannten Gase. Die Zugabe von Argon und Xenon im Verfahren begünstigen die Bildung sphärischer Partikel. In dem erfindungsgemäßen Verfahren werden die gasförmige Siliciumverbindung, das reaktive Gas und die Verdünnungsgase als Gesamtzusammensetzung von 100 Vol.-% in dem Verfahren eingesetzt. Dabei ist es besonders bevorzugt, wenn die Verdünnungsgase mindestens zu 0,0001 bis 99 Vol.-%, insbesondere von 0,0001 bis 60 Vol.-%, bevorzugt von 0,1 bis 1,0 Vol.-% Edelgase enthält, insbesondere Xenon und/oder Argon. Somit ist es bevorzugt von 0,0001 bis 99 Vol.-%, insbesondere von 0,0001 bis 60 Vol.-%, bevorzugt von 0,1 bis 1,0 Vol.-% Edelgase in dem Verfahren einzusetzen, insbesondere Xenon und/oder Argon. Die Zugabe von Edelgasen, insbesondere von Xenon und/oder Argon, begünstigt die Bildung von sphärischen Partikeln.

Stickstoff ist unter den genannten Reaktionsbedingungen kein inertes Verdünnungsgas, sondern ein reaktives Gas. Das Verdünnungsgas kann vorzugsweise mit der gasförmigen Silicium-Verbindung und/oder dem reaktiven Gas vor dem Einbringen in den Reaktionszylinder gemischt werden. Alternativ wird das inerte Verdünnungsgas zur Abkühlung der Zersetzungsprodukte, wie beispielsweise zur Abscheidung der Pulver zugegeben. Die Zersetzung der Silicium-Verbindung und optional des reaktiven Gases kann auch durch Überführen der in einen Hochvakuum-Bereich erfolgen. Als ein Hoch-Vakuum wird ein Vakuum kleiner gleich 0,01 bar, insbesondere kleiner gleich 0,001 bar, kleiner gleich 0,0001 bar erachtet.

Der Druckbereich liegt üblicherweise bei 1 mbar bis 50 bar, insbesondere bei 1 mbar bis 10 bar, bevorzugt bei 1 mbar bis 5 bar. Je nach dem gewünschten Zersetzungs- und/oder Legierungs- und/oder Beschichtungsprodukt und, um die Bildung von Kohlenstoff enthaltenden Prozessgasen zu minimieren, kann das Verfahren auch in einem Druckbereich von 1 bis 50 bar erfolgen, bevorzugt bei 2 bis 50 bar, besonders bevorzugt bei 5 bis 50 bar. Dabei weiß der Fachmann, dass der zu wählende Druck ein Kompromiss zwischen Gasabführung, Agglomerierung und Reduktion der Kohlenstoff enthaltenden Prozessgase ist.

Bevorzugt einsetzbare reaktive Gase umfassen Stickstoff enthaltende Verbindungen, Germanium enthaltende Verbindungen, Wasserstoff, Stickstoff (N₂), NH₃, Hydrazin, Stickstoffwasserstoffsäure, eine Bor enthaltende Verbindung, wie Diboran, Kohlenwasserstoffe, wie Methan, Butan, Propan, höchstreines Erdgas, aromatische Verbindungen, wie Toluol, insbesondere jeweils sauerstofffreie Verbindungen, mit der Maßgabe, dass sich bei der Zersetzung kein Wasser bildet. Bevorzugte reaktive Gase umfassen Kohlenwasserstoffe, wie Methan, Ethan, Propan, Butan, Gemische dieser etc., HCl, Kohlenwasserstoffe mit Stickstoff. Gleichfalls besonders bevorzugte reaktive Gase umfassen Verbindungen der vorgenannten Elemente (reaktive Gase) der dritten Hauptgruppe des Periodensystems der Elemente (Gruppe 13 des PSE IUPAC), wie Aluminium, und/oder Elementen der fünften Hauptgruppe (Gruppe 15 des PSE IUPAC), wie Phosphor, Arsen, Antimon.

Kohlenstoff und Wasserstoff enthaltende Verbindung, wie aliphatische, cycloaliphatische, araliphatische oder aromatische Kohlenwasserstoffe, die gegebenenfalls Stickstoff- und/oder Schwefel als Heteroatome enthalten, oder Blausäure, Isocyansäurer, Knallsäure oder Isothiocyansäure können ebenfalls als Kohlenstoff enthaltende Verbindungen eingesetzt werden.

Als Stickstoff und Wasserstoff enthaltende Verbindungen für den Einsatz im erfindungsgemäßen Verfahren wird bevorzugt Ammoniak eingesetzt.

Das reaktive Gas kann auch in einer Plasmareaktionszone mit einer Verbindung wie Diboran oder Borhalogenid, insbesondere Diboran in einem Plasma umgesetzt werden. Je nach Verfahrensführung können die Verbindungen ebenfalls zur Ausbildung einer zumindest teilweisen Beschichtung der Submicropartikel und/oder der Cluster in Form von Macropartikeln eingesetzt werden.

Als reaktive Gase gelten auch mit Bor, Aluminium und/oder Phosphor angereicherte Gase oder Gasgemische, die in Aufreinigungsprozessen zur Herstellung höchstreiner Verbindungen als Nebenstrom bzw. Abfallprodukte erhalten werden. Diese reaktiven Gase können bei konstanten Gehalten an Bor, Aluminium, Phosphor etc., die hier als Legierungskomponente verwendet werden, zur Herstellung der Metallverbindungspulver eingesetzt werden.

Die Beschichtung kann im geeigneten Plasma durch chemische Gasphasenabscheidung erfolgen. Generell kann die Ausbildung der Legierung in einem Verfahren im Gleichstrom oder auch im Gegenstrom (Gasstrom) oder in gekreuzten Gasströmen erfolgen. Eine definierte Ausbildung mindestens einer Zone Legierung oder Beschichtung kann durch seitliche Zufuhr eines reaktiven Gases oder eine Zufuhr im Gegenstrom gut homogenisiert und gesteuert werden. Dabei sind fluiddynamische Todzonen zu vermeiden bzw. ist auf die Vermeidung von Wandabscheidungen tunlichst zu achten.

Generell kann die thermische Behandlung die Zersetzung umfassen sowie eine thermische Nachbehandlung, die zunächst ein starkes Abkühlen auf kleiner 2000°C, vorzugweise kleiner gleich 1400 °C zur Ausbildung der kristallinen Partikel umfasst, die anschließend in einem weiteren Verfahrensschritt zumindest teilweise in einem Plasma oder in einer thermischen Behandlung beschichtet werden können. Zusätzlich oder alternativ kann durch eine thermische Nachbehandlung auch eine Ausbildung der Cluster erfolgen und deren Geometrie gesteuert werden.

Die Siliciumverbindungen können mittels mindestens einer Düse in die Gasphase überführt werden oder als gasförmige Siliciumverbindung optional als Gemisch umfassend das reaktive Gas und/oder das inerte Verdünnungsgas in den Reaktionsraum eingebracht werden.

Zur Durchführung des Verfahrens ist es zusätzlich zu den vorgenannten Merkmalen weiter bevorzugt, wenn die Gasentladung ein nicht-thermisches Plasma ist. Weiter bevorzugt erfolgt die Gasentladung in einer dielektrischen Barriereanordung. Für die Erzeugung bspw. durch Hochspannungspulse oder Radiofrequenz oder Mikrowellen und die Definition des nichtthermischen Plasmas selbst und der Partikelgenese wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3 446-13627-4".

Besonders bevorzugt werden von 0,1 und 10 Ws/cm² zur Plasmaerzeugung eingetragen. Dabei ist es weiter bevorzugt, wenn der bzw. die Leistung mittels phasengenauer

Momentanleistungsmessung mit einer Bandbreite von mindestens 250 kHz durchgeführt wird, wobei die Bestimmung der Momentanleistungsmessung in einem koaxialen Standard-Reaktor mit 50 cm² Entladungsfläche erfolgt. Ein koaxialer Reaktor ist vorzugsweise ein Rohrreaktor, insbesondere rotationssymmetrischer Rohrreaktor. Durch einfache zeitliche Integration ergibt sich die entsprechende Energie.

Der Energieeintrag zur Ausbildung des nicht-thermischen Plasmas erfolgt vorzugsweise in der Art, dass sich in dem sich ausbildenden Plasma möglichst homogene Bedingungen für die Umsetzung der Silane bspw. mit C, N und/oder Ge enthaltenen Verbindungen ausbilden, dabei ist es besonders bevorzugt, wenn das nicht-thermische Plasma bei einer Spannung betrieben wird, bei der die Entladung den gesamten Reaktorraum ausfüllt (normale Glimmentladung).

Gegenstand der Erfindung sind auch Formulierungen enthaltend die Metallverbindungspulver umfassend optional Hilfsmittel und Lösungsmittel und/oder Dispersionsmittel und/oder Suspensionsmittel.

Gegenstand der Erfindung ist auch ein Reaktor (Freiraum Reaktor) **1** zur Herstellung von Metallverbindungspulvern MeX, wobei Me Silicium ist und X jeweils unabhängig ausgewählt ist aus Stickstoff, Kohlenstoff und Germanium mit Partikeln deren Submicropartikelgröße von 5 nm bis 3000 nm liegt, wobei der Reaktor **1** einen Reaktionszylinder **2** mit Reaktionsraum **2.1** umfasst und im Bereich des Reaktoranfangs **2.a, 3** mindestens zwei Zuführungen **4.1, 4.2, 4.3** aufweist für die Einleitung a) der mindestens einen bei erhöhter Temperatur gasförmigen Siliciumverbindung, und b) optional des mindestens eines reaktiven Gases und/oder Verdünnungsgases, in den Reaktionsraum **2.1,** wobei dem Reaktionsraum **2.1** zumindest in einem Bereich am äußeren Umfang des Reaktionsraumes **2.1** Heizvorrichtungen **7** zugeordnet sind, und/oder dem Reaktionsraum **2.1** mindestens ein Plasmagenerator **9** zugeordnet ist, zur Erzeugung eines Plasmas im Reaktionsraum **2.1,** und wobei dem Reaktor 1 mindestens zwei Zuführungen **4, 4.1, 4.2** und/oder **4.3** im Bereich des Reaktoranfangs **2a** oder **3** zugeordnet sind, wobei die Zuführungen in einem Winkel von größer gleich 30° zueinander angeordnet sind. Im Reaktionsraum **2.1** ist mindestens eine Reaktionszone **2.1a,** alternativ sind mehrere Reaktionszonen **2.1a** bis **2.1 n** angeordnet. Vorteil der verschiedenen Reaktionszonen ist die Möglichkeit eine definierte Temperaturführung über die Reaktorläge einzustellen.

Vorzugsweise weist die Zuführung **4** einen Winkel von 0 bis 45° zur Mittelachse des Reaktionszylinders **2** auf, vorzugsweise 0 bis 10° und die zweite Zuführung **4.3** einen Winkel von größer 45 bis 135° zur Mittelachse des Reaktionszylinders **2** auf, insbesondere um 80 bis 100°, bevorzugt um 90°.

Optional kann der Reaktor zwischen dem Reaktoreingang und Reaktorausgang über weitere Zuführungen verfügen, die für die Ausbildung einer Legierung und/oder Beschichtung der Metallverbindungspulver verwendet werden können. So kann beispielsweise über eine Zuführung im mittleren Bereich des Reaktorzylinders eine Beschichtung der Partikel erfolgen, indem beispielswiese eine Bor enthaltenden Verbindung in den Reaktionszylinder, insbesondere in eine Reaktionszone des Reaktionsraumes zugeführt wird.

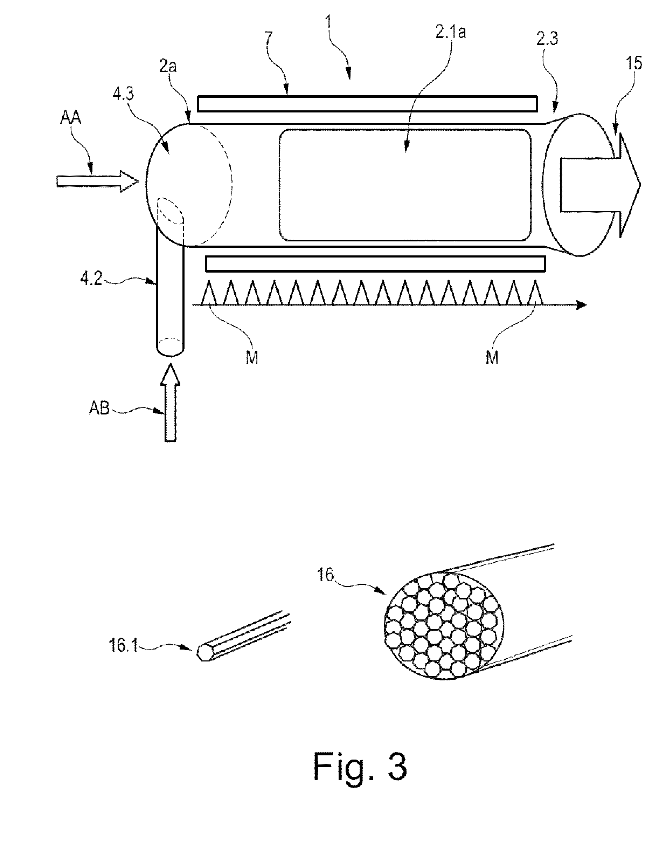

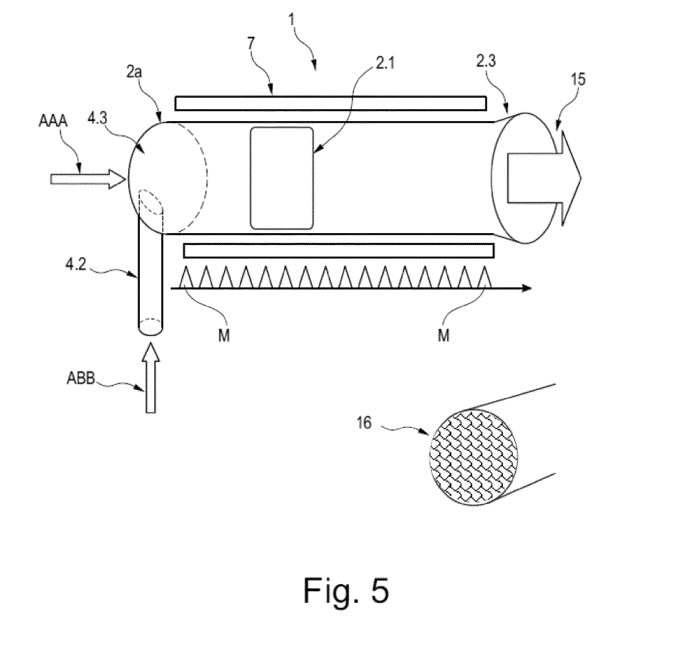

Der Reaktionsraum und/oder die mindestens eine Reaktionszone kann zudem gemäß **Figur 3** und 5 einen Reaktoreinsatz mit Milli-Reaktionskanälen aufweisen. Der Reaktoreinsatz mit Millireaktionskanälen kann bspw. aus hochtemperturfestem Material, bspw. Siliciumcarbid gefertigt sein oder aus jedem anderen geeigneten Material. Bevorzugt sind SiC, Al₂O₃, AIN, Siliciumnitrid und/oder Graphit oder Komposite daraus. Der Reaktoreinsatz dient dazu eine sehr schnelle Zersetzung und sehr schnelle Abscheidung über die Einstellung von Temperaturdifferenzen über sehr kurze Wegstrecken im Reaktionsraum und damit in den einzelnen Reaktionszonen zu gewährleisten.

Nach einer alternativen bevorzugten Ausführungsform weist der Reaktionsraum **2,** insbesondere in mindestens einer Reaktionszone **2.1a,** eine Reaktoreinsatz **16** mit Kanälen auf, wobei der Reaktoreinsatz vorzugsweise innere Kanälen umfasst, deren Durchmesser 1 bis 20 mm betragen, vorzugsweise 1 bis 10 mm, vorteilhaft sind die Kanäle rohrförmig, wobei ein rohrförmiger Kanal im Querschnitt jede beliebige Geometrie umfassend kreisförmig, wabenförmig etc. aufweisen kann.

Vorteilhaft verfügt der Reaktionsraum **2.1** über mindestens eine Reaktionszone **2.1a** bis **2.1n,** insbesondere über 2 bis 100 Reaktionszonen. In jeder Reaktionszone können definierte thermische Bedingungen oder Plasmabedingungen eingestellt werden.

Der Reaktor verfügt vorzugsweise im Bereich des Reaktorausgangs **2.3** über eine Vorrichtung für die Auftrennung von Reaktionsprodukten, insbesondere für die Abtrennung der festen partikelförmigen Metallverbindungen, vorzugsweise eine Vorrichtung zur Partikelabscheidung **15,** bevorzugt eine Vorrichtung umfassend eine gasdurchlässige Membran **10.**

Der Reaktionsraum ist evakuierbar, so dass ein definiertes Vakuum einstellbar ist.

Das Plasma in der Entladungszone kann durch Hochspannungspulse in einfacher Weise als Plasma im nichtthermischen Gleichgewicht erzeugt werden. Die Temperaturen der Schwerteilchen (Atome, Ionen) sowie der Leichtteilchen (Elektronen) richtet sich nach reaktionstechnischen Erfordernissen. So sind bei der Siliciumnitrid Herstellung für hohe Ausbeuten Temperaturen über 1750°C bevorzugt zu vermeiden. Ist die Zielrichtung der Wunsch nach eher kleineren Partikeln, dann kann es günstig sein, vorsichtig in dieses Temperaturregime zu fahren. Dadurch wird die Nukleation kinetisch gehemmt und so werden in überraschender Weise bevorzugt kleine Teilchen im Reaktionsraum gebildet.

Für die Abscheidung der Metallverbindungspulver wurde in einer alternativen Ausführungsform mindestens ein Funktionsmolekül optional ein inertes Verdünnungsgas zum Quenchen im Bereich des Reaktorausgangs des Reaktionszylinders eingesprüht. Über die Temperaturdifferenz und das zugeführte Gasvolumen an Funktionsmolekül kann die Partikelgrösse und die Abscheidungsrate eingestellt werden. Durch Zugabe reaktiver Gase oder organofunktioneller Silane kann hier auch eine Beschichtung, Ausbildung einer Legierung und/oder Funktionalisierung der Metallverbindungspulver erfolgen.

Nach der Herstellung über das erfindungsgemäße Verfahren kann das Metallverbindungspulver durch passive Oxidation mit Luft in Reinform einfach gewonnen werden. Alternativ kann das Siliciumcarbid durch Sublimation bei hohen Temperaturen und gegebenenfalls im Hochvakuum, weiter aufgereinigt und/oder abgeschieden werden. Siliciumcarbid kann bei Temperaturen um 2800 °C sublimiert werden.

Ebenfalls Gegenstand der Erfindung sind Formulierungen, enthaltend eine Metallverbindung oder eine Metallverbindung erhältlich nach dem erfindungsgemäßen und mindestens einen Hilfsstoff und/oder ein Bindemittel und optional ein Lösemittel. Bevorzugte Formulierungen können vorliegen in Form einer Suspension, Dispersion oder einer Einbettung, einer Matrix, einer kosmetischen Formulierung, pharmazeutischen Formulierung, einer Bremspaste, Schleifpaste, Druckpaste, Tinte, in druckbaren Polymeren, elektrisch leitenden Paste, Haftklebemasse, eingebettet in eine Folie oder beispielsweise auch als Gründling vorliegen.

Das Metallverbindungspulver kann auch in gepresster, extrudierter, granulierter, gesinterter und/oder kristallisierter Form vorliegen und entsprechend abgepackt werden.

Die Formulierung kann in Form von Presslingen, als kosmetische Formulierung vorliegen. Eine kosmetische Formulierung kann eine Creme, ein Fluid sein, dass optional SiC oder das Metallverbindungspulver als Sonnenschutz-Komponente umfasst.

Formulierung enthaltend eine Metallverbindung umfassend Silicium mit einem Lösungsmittel und/oder Dispersionsmittel und/oder Suspensionsmittel.

Die erfindungsgemäßen Metallverbindungspulver eignen sich aufgrund ihrer Inertheit und ihres Transmissionsverhaltens besonders gut als UV-Schutzmittel, da die erfindungsgemäßen Pulver, insbesondere die SiC-Pulver, transparent vorliegen können und vorteilhaft kleiner 400 nm keine nennenswerte Transmission aufweisen.

Gegenstand der Erfindung ist auch die Verwendung der Metallverbindungspulver sowie die nach dem Verfahren erhältlichen Metallverbindungspulver zur Herstellung von Thermoelementen, Halbleitern, Halbleitermaterialien, Pasten, Cremes, Sonneschutzproduken, pharmazeutischen Produkten, Silicium enthaltenden Pasten (Solarindustrie, Beschichtung), Elektroden, Membranen, Isoliermaterial, insbesondere als Isoliermaterial in thermoelektrischen Generatoren, vorzugsweise als thermische Isolatoren und elektrisch leitende Komponenten, Katalysatoren, von LEDs, Displays, transparenter Schichten, Flat Panel Displays, Schmelztiegeln, Tiegeln zur Kristallisation hochreiner metallischer Verbindungen, Beschichtungen, Aerosolen, Materialien für die Thermoelektrik, zur Herstellung hochreiner polykristalliner Metallverbindungen oder von Einkristallen der Metallverbindungen, in Hochtemperatur Transistoren, die von 100 bis 400 °C, vorzugsweise um 300 °C betrieben werden können, zur Herstellung von Hochtemperatursperrschichten, die bei 300 bis 400 °C betrieben werden können, Zur Herstellung von Hochtemperaturmembranen, die bei bis zu 300 bzw. 400 °C betrieben werden können, zur Herstellung von Hochtemperaturbauteilen in Batterien, die bei 300 bis 400 °C betrieben werden können, zur Herstellung von Bauteilen, deren Absorption bei 300 bis 1000nm sich im Wesentlichen linear ändert, insbesondere von Bauteilen, deren Transmission bei etwa 1000 nm 50 % beträgt und bis 450 nm oder bis etwa 300 nm 20 % beträgt und ab 300 nm im Wesentlichen keine Transmission mehr erlaubt, oder als Reaktand bei der Herstellung von kristallinem Silicium oder kristallinen Siliciumverbindungen, hochreine Schleifmittel, hochreine Hitzekacheln oder als Material von Artikeln. Ebenfalls Gegenstand der Erfindung ist die Verwendung der Metallverbindungspulver zur Herstellung von LEDs, Halbleitermaterialien, Flat Panel Displays und zur Herstellung von Materialien für die Thermoelektrik oder zur Herstellung von Einkristallen, Schleifmitteln, Isolatoren, als Feuerfeststoff, wie als Hitzekachel, oder bei der Herstellung von Artikeln oder bei der Herstellung von Elektroden und/oder Schmuck, Zur Herstellung von OLEDS, Verwendung zur Herstellung von Halbleiterausgangsstoffen, Halbleitern, Thermoelementen zur Energierückgewinnung aus Abwärme, insbesondere von hochtemperaturstabilen Thermoelementen sowie zur Herstellung von Hochtemperatursperrschichten und UV/Vistransparenten und hochtemperaturstabilen Bauteilen verwendet werden.

Nach einer erfindungsgemäßen Alternative konnte nanokristallines Bor-Siliziumangereichertes SiC - kurz Si/SiC durch Umsetzung von SiH₄ mit Diboran und C₂H₂ erhalten werden. Es zeigten sich überraschend fadenförmige Strukturen mit einem Aspektverhältnis im Bereich von 1:10 bis 1:1000. Diese Fäden zeigen eine richtungsabhängige Wärmeleitfähigkeit. Diese Eigenschaft eignet sich besonders für thermoelektrische Anwendungen. Im Temperaturbereich zwischen 300 und 600°C zeigt das erfinderische Material einen ZT von über 0,7 und somit verbesserte Leitfähigkeit bei inhibierter Wärmeleitfähigkeit. Der Sauerstoffgehalt wurde auf unter 10 ppm bestimmt.

Die Partikelgrößenbestimmung der Metallverbindungspulver und ebenfalls die Bildung von Agglomeraten oder das Vorliegen von Submicropartikeln kann analytisch mit nachfolgenden Methoden bestimmt werden. Die Bestimmung der Teilchengröße kann u.a. mittels Siebanalyse, TEM (Transelektronenmikroskopie), REM (Rasterkraftelektronenmikroskopie) oder Lichtmikroskopie erfolgen.

Bevorzugt liegt die Leitfähigkeit (vgl. http://de.wikipedia.org/wiki/Elektrische_ Leitffähigkeit) der Verfahrensprodukte, insbesondere der hochdicht verpreßten und versintertem pulvrigen Verfahrensprodukte, gemessen in der dem Fachmann geläufigen Art zwischen zwei Spitzen Elektroden bei κ [m/Q.m²] = 1 · 10⁻¹ bis 1 · 10⁻⁶. Angestrebt wird für das jeweilige Metallverbindungspulverkörper bei 200°C bspw. für Silizium 1·10⁻² S/m, SiGe 8 S/m, SiN <1·10⁻⁶ S/m , SiC< 1 · 10⁻³.

Die Leitfähigkeit korreliert direkt mit der Reinheit des Verfahrensproduktes.

Die nachfolgend erläuterten Figuren und Ausführungsbeispiele erläutern exemplarisch die Gegenstände der Erfindung, ohne diese auf diese konkreten Beispiele zu beschränken.

### Ausführungsbeispiele

Die nachfolgenden Figuren zeigen:
**Figur 1****:** Freiraum Reaktor mit Abschirmrohr 4;
**Figur 2****:** Heraeus Ofen ROF 4/50 mit Mikrokanal-Lanze und schraubenförmiger Wandströmung von inerter Verdünnungsgase;
**Figur 3****:** Mikrostruktur-Diffusor-Reaktor (FSR) mit verbessertem Wärmeübergang;
**Figur 4****:** SiC aus TEOS;
**Figur 5****:** Mikrostruktur-Diffusor-Reaktor (FSR) mit kurzer Verweilzeit sowie verbessertem Wärmeübergang;
**Figur 6****:** XRPD-Diffraktogramme von (b) amorphem Si₃N₄ (Si₃N₄-3), (b, c) Si₃N₄ kristallinem α-Si₃N₄;
**Figur 7****:** TEM-Analyse vom SiC Partikel mit polyedrischen Habitus, die Partikelgröße liegt im Bereich von 10 bis 40 nm.
**Figuren 8a** bis **8c****:** Kristalline Submicropartikel von SiC.
**Figur 9a** zeigt schematisch Submicropartikel A, **Figur 9b** zeigt schematisch Submicropartikel C,
**Figuren 9c und 9d** stellen schematisch einen, eine kristalline MeX-Phase aufweisenden Submicropartikel A mit mindestens einer Zone D einer MeX-Legierung eines Elektronenakzeptors oder Elektronendonators dar.
**Figur 10****:** TEM-Ausnahme von SiC-Kristalle mit einer Kristallgröße von 2,5 nm (Auflösung 100000 :1, 200 nm)
**Figur 11****:** XRPD, Reflexe/(counts): 56-58/(ungefähr 1133), 64,5-70,5/(ungefähr 870), 72-73/ (ungefähr 540), 76-78/(ungefähr 1650).
**Figur 12****:** Si₃N₄/Si-Fäden (TEM)
**Figur 13**:Röntgenpulverdiffraktogramm eines kristallinen und dreier amorpher Si₃N₄/Si Metallverbindungspulver mit unterschiedlichem Gehalt an metallischem Silicium im Kern und Si₃N₄ Hülle.

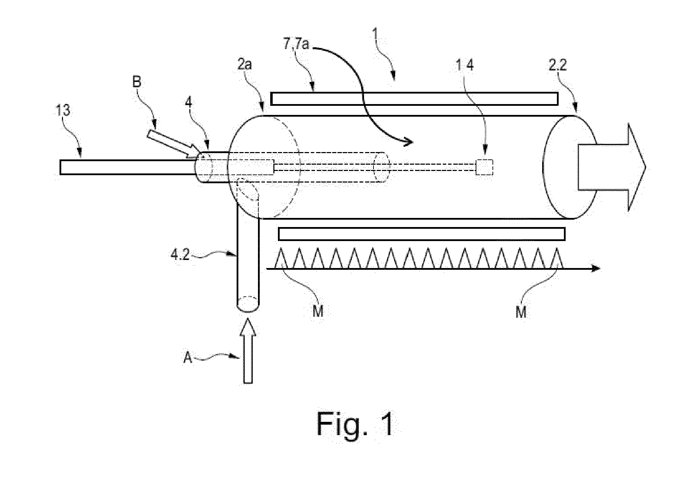

**Figur 1** stellt einen Freiraum Reactor (FSR) mit tangentialer Wandströmung dar, der eine Anordnung zur Temperatur-Messung im Ofen umfasst. Die Geometrie eines bevorzugten Ofens sowie die Bezugszeichen sind nachfolgend wiedergegeben: **2a:** Reaktor-Rohr: Aussendurchmesser: 36,1 mm; Innendurchmesser: 33,1 mm; **7a:** Heizzone Länge 700 mm, Temperatur der Heizzone bspw.T = 1300 °C; **4:** Abschirmrohr für Lanze: Aussendurchmesser: 6,7 mm, Innendurchmesser: 3,7 mm; **13:** Temperatur-Messlanze mit Messfühler; **14:** Temperaturmessfühler für Hochtemperaturmessung bis 2000°C; **2.2:** Reaktor-Rohr Ausgang; **4.2:** Zuführung tangential für Zirkulargasströmung im Reaktor; **A:** Prozessgas A und **B:** Prozessgas B.

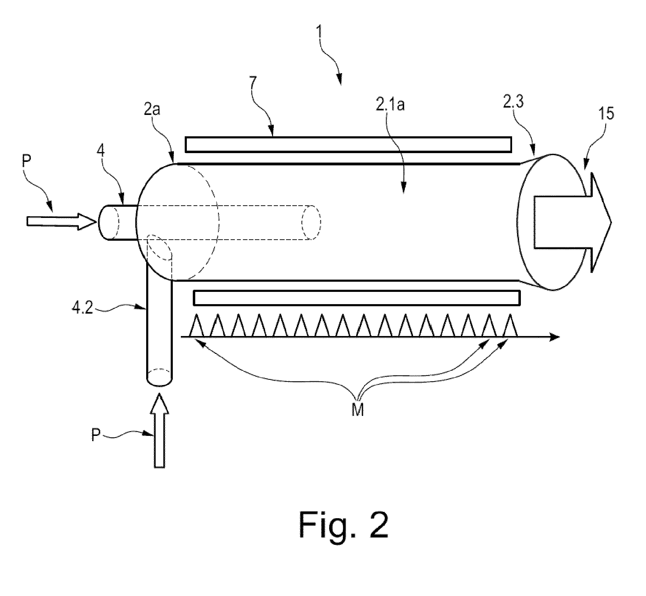

In **Figur 2** ist ein Heraeus Ofen ROF 4/50 mit Mikrokanal-Lanze und schraubenförmiger Wandströmung von inerten Verdünnungsgasen dargestellt. Der Reaktor ist sehr gut zur Herstellung von kristallinen Metallverbindungspulver mit einer Oberflächenabscheidung von Legier- oder Dotierelement z.B. Bor geeignet. Die Ofen Geometriedaten sowie die Bezugszeichen sind nachfolgend zusammengefasst erläutert: **2a:** Reaktor-Rohr: Aussendurchmesser: 36,1 mm; Innendurchmesser: 33,1 mm; **7:** Heizzone Länge 700 mm bei

T = 1100 °C, **15:** Partikelabscheidung; **4:** Abschirm-Lanzenrohr (Aussendurchmesser: 6,7 mm, Innendurchmesser: 3,7 mm verschiebbar: 31 cm in Reaktionszonen, **2.1a:** Reaktionszone 1600°C, **2.3** Reaktor-Rohr Ausgang (mit Venturi-Trichter) mit Quenchzone, **4.2:** Zuführung tangential für Zirkulargasströmung im Reaktor **A:** Prozessgas A z.B. Monosilan, Methan, **B:** Prozessgas B z.B. Diboran.

**Figur 3** zeigt einen Mikrostruktur-Diffusor-Reaktor (MDR) mit verbessertem Wärmeübergang, Dieser Reaktor kann zur Darstellung von MeX verwendet werden. Nachfolgend sind die Reaktionsofen Geometriedaten sowie die Bezugszeichen zusammengefasst: **2a:** Reaktor-Rohr: Aussendurchmesser: 36,1 mm; Innendurchmesser: 33,1 mm, **7/7a:** Heizzone Länge 700 mm als Temperatur kann bspw. um T = 1250 °C eingestellt werden, **15:** Partikelabscheidung, **4.3:** Prozessgaszuführung mit Gasmischeinheit, **2.1a:** Reaktionszone 1250°C, **2.3:** Reaktor-RohrAusgang (mit Venturi-Trichter) mit Quenchzone, **4.2:** Zuführung Zusatzgas z.B. **AB** Wasserstoff/Ethan für Regelung Zusammensetzung, Prozessgas / Wärmeübertrag/ Partikelbildung im Reaktor, **16:** Reaktoreinsatz mit Milli-Kanälen, **AA:** Prozessgasmischung z.B. Monosilan-Ethan-Gemisch, **16.1:** Millikanal Ausschnitt.

**Figur 5** zeigt einen Mikrostruktur-Diffusor-Reaktor (MDR) mit kurzer Verweilzeit sowie verbessertem Wärmeübergang. Dieser Reaktor kann vorzugsweise zur Darstellung von kristallinem MeX verwendet werden. Die Reaktionsofen Geometriedaten sowie die Bezugszeichen sind nachfolgend zusammengestellt: **2a:** Reaktor-Rohr: Aussendurchmesser: 36,1 mm; Innendurchmesser: 33,1 mm, **7:** Heizzone Länge 700 mm z.B. bei T = 1150 °C, **15:** Partikelabscheidung, **4.3:** Prozessgaszuführung mit Gasmischeinheit, **AAA** Vorgemischtes Prozessgas, **2.1a:** Reaktionszone z.B. bei 1150°C, **2.3:** Reaktor-Rohr Ausgang (mit Venturi-Trichter) mit Quenchzone, **4.2:** Zuführung Zusatzgas z.B. **ABB** Wasserstoff/Argon für Regelung Zusammensetzung Prozessgas/ Wärmeübertragung/Partikelbildung im Reaktor, **16:** Reaktoreinsatz mit Milli-Kanälen z.B. SiC-Fritte, **AAA:** Prozessgasmischung z.B. Monosilan-Wasserstoff-Gemisch, **16.1:** Millikanal Ausschnitt.

### Bezugszeichenliste:

- **1**: Reaktor 1 (Freiraum Reaktor)
- **2**: Reaktionszylinder (horizontal oder vertikal),
- **2a**: horizontaler Reaktionszylinder
- **2.1**: Reaktionsraum
- **2.1a**: Reaktionszone, Reaktionszone 2.1a bis 2.1n
- **2.2**: Reaktorzylinder Ausgang, insbesondere Reaktorrohr Ausgang
- **2.3**: Reaktorzylinder Ausgang (mit Venturi-Trichter) Quenchzone
- **3**: oberhalb 3 im Reaktionsraum (2.1)
- **4**: Abschirmung für Lanze
- **4.1**: mindestens einer Düse
- **4.2**: Zuführung tangential, insbesondere für Zirkulargasströmung im Reaktor
- **4.3**: Prozessgaszuführung mit Gasmischeinheit
- **5**: untere Bereich im Reaktor 2.1
- **6**: Vorrichtung
- **7**: Heizvorrichtung; **7a:** Heizzone
- **8**: Reaktorwand
- **9**: Plasmagenerator
- **10**: gasdurchlässige Membran
- **11**: Düse(n)
- **12**: rotierende Vorrichtung
- **13**: Temperatur-Messlanze
- **14**: Temperatur-Messfühler
- **15**: Partikelabscheidung
- **16:**: Reaktoreinsatz mit Milli-Kanälen z.B. SiC-Fritte
- **16.1:**: Millikanal Ausschnitt

**A:** Prozessgas A; **B:** Prozessgas B; **AB:** Wasserstoff/Ethan für Regelung Zusammensetzung Prozessgas / Wärmeübertrag/Partikelbildung im Reaktor; **AA:** Prozessgasmischung z.B. Monosilan-Ethan-Gemisch; AAA Vorgemischtes Prozessgas; **ABB** Wasserstoff/Argon für Regelung Zusammensetzung Prozessgas/Wärmeübertrag/Partikelbildung im Reaktor; **AAA** Prozessgasmischung z.B. Monosilan-Wasserstoff-Gemisch.

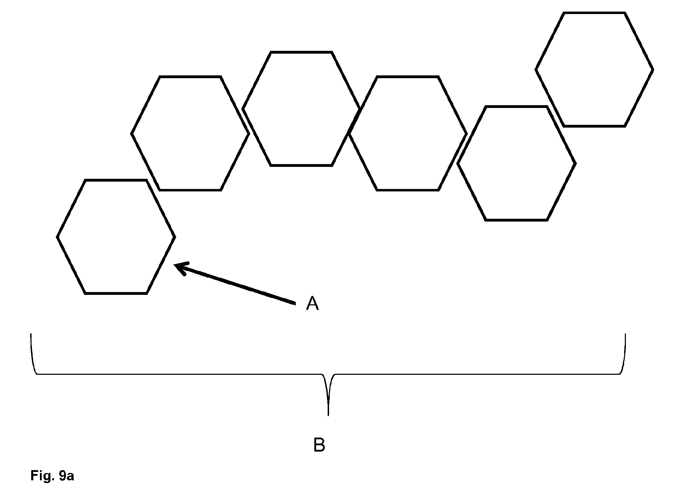

Die **Figuren 9a** bis **d** stelle dar: **A:** Submicropartikel; **B:** Macropartikel; **C:** MeX-Legierung, **D:** Zone einer MeX-Legierung

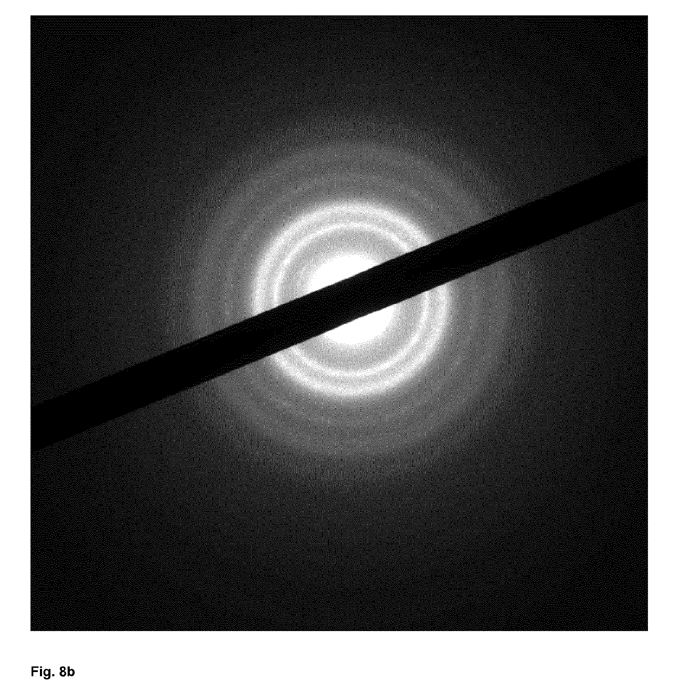

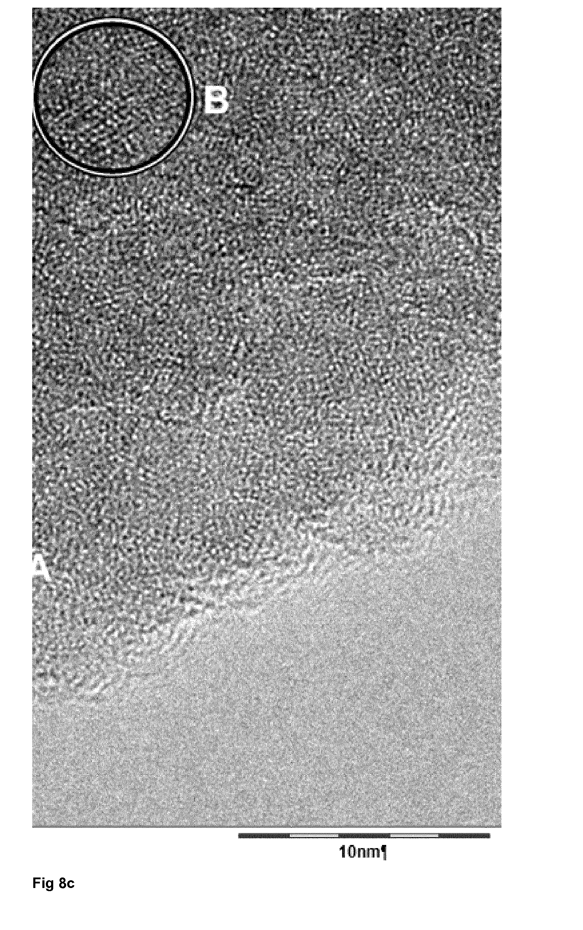

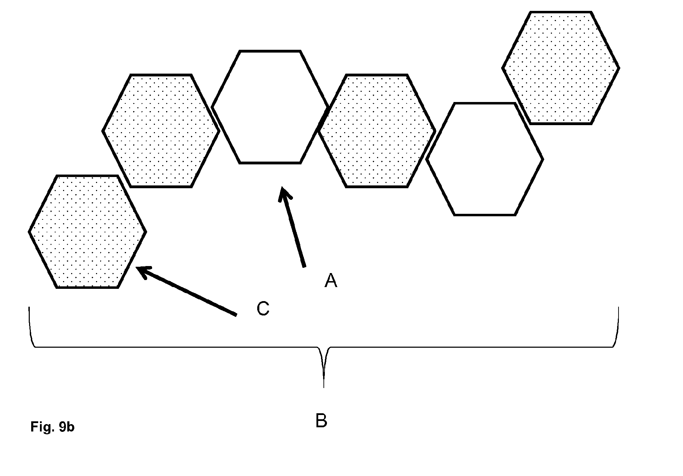

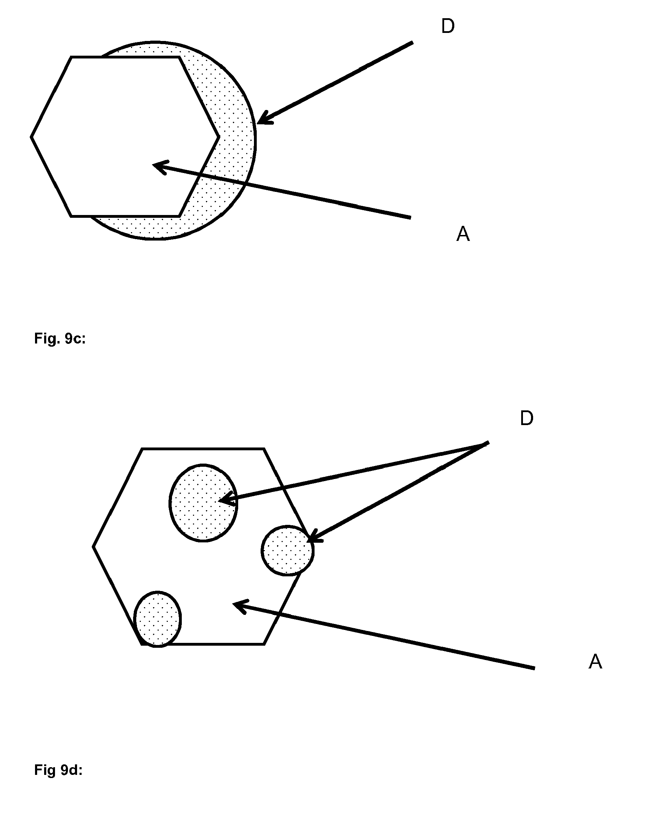

**Figur 9a** zeigt schematisch Submicropartikel **A** mit einer kristallinen Phase, die agglomeriert als Cluster in Macropartikeln vorliegen. **Figur 9b** zeigt schematisch Submicropartikel **C** mit einer MeX-Legierung, der kristallin oder ggf. amorph vorliegen kann sowie Submircopartikel **A** mit einer kristallinen MeX-Phase. **Figuren 9c und 9d** stellen schematisch einen, eine kristalline MeX-Phase aufweisenden Submicropartikel A mit mindestens einer Zone **D** einer MeX-Legierung eines Elektronenakzeptors oder Elektronendonators dar, mit als zumindest teilweisen äußeren Beschichtung oder mit in den Submicropartikeln gebildeten Zonen **D.** Bevorzugt sind MeX-Legierungen in **C** und **D** mit Bor. Erfindungsgemäße Metallverbindungspulver können die Submicropartikel der **Figuren 9c, 9d** als Macropartikel nach **Figur 8b** umfassen.

Alle Angaben in Liter entsprechen Normliter. Der Plasmareaktor wurde bei 0,45 kW und ca. 14 kHz mit Hochspannungspulsen mit einer Halbwertsbreite von t(50) 567ns und einem Massestrom von 43 NL/min betrieben. Für die nachstehend genannten Plasma-Verfahren wurden im nichtthermischen Gleichgewicht betriebene Gasentladungen verwendet.

XRPD: PANalytical SAXS, Propenpräparation zwischen zwei Mylarfolien in einem Transmissionsprobenträger. Auswertungssoftware: SAXS140058).

**Ausführungsbeispiel 1:** Gewinnung von Silicium-Nitrid in hochreiner Form in einem Freiraum Reaktor.

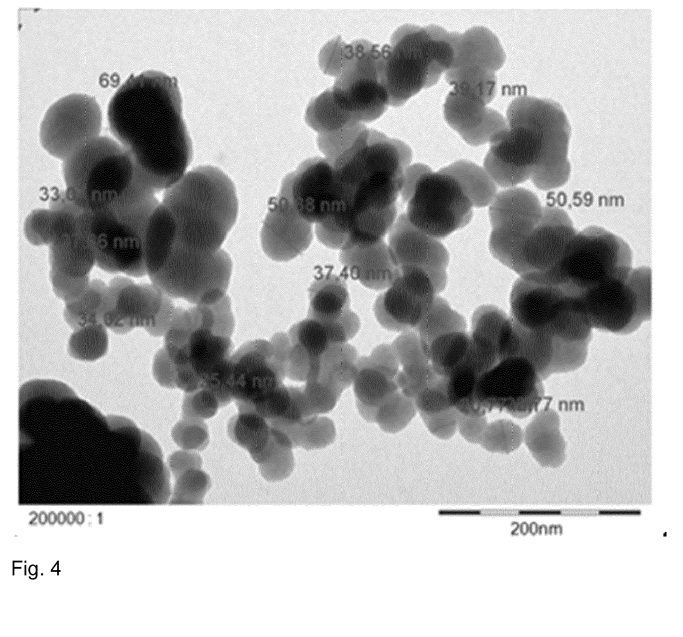

**1a.** (nicht erfindungsgemäß) Bei ca. 1200 °C +/- 200 °C und einer Verweilzeit von ca. 100 Millisekunden +/- 50 Millisekunden wurde amorphes SiN mit deiner Mittleren Partikelgröße von rund 39 nm gewonnen **(****Figur 4****:** SiN-AM-TEM, iso-Prop/Wasser): Partikelgrößen: 69,14 nm, 38,56 nm, 39,17 nm, 50,59 nm, 20,77 nm, 37,4 nm, 50,88 nm, 69,41 nm, 33,07 nm, 37,86, 34,02 nm, 25 nm, 44 nm).

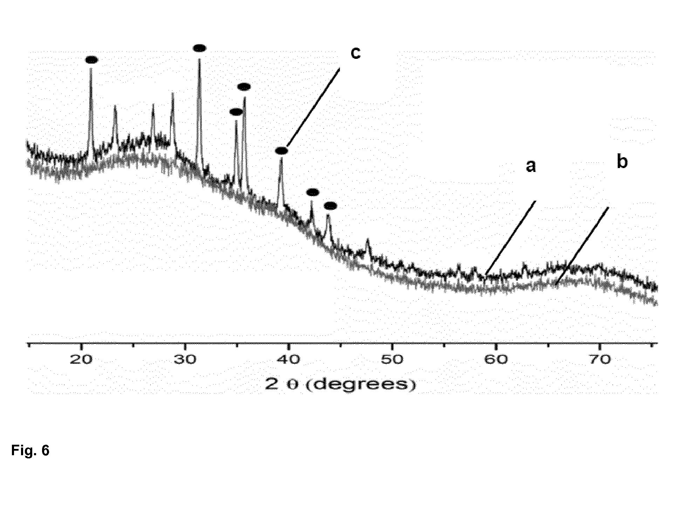

**1b.** Nach dem erfindungsgemäßen Verfahren wird demgegenüber nach Zuschalten eines zweiten Reaktors als zusätzliche Verweilzeitstrecke mit rund 400 Millisekunden +/- 100 Millisekunden Verweilzeit und einer Temperatur von ca. 1500 °C +/- 250°C kristallines Siliciumnitrid gewonnen. Figur 6 zeigt kristallines SiN (α-Si₃N₄) wie die XRD-Analyse beider Materialproben zeigt **(****Figur 6****:** SiN-XRD: SiN **a/c** Reflexe (α-Si₃N₄): 21, 31,5, 35, 35,5, 39,5, 42,5 44 ° 2θ (Theta), b: amorphes SiN).

Für das Ausführungsbeispiel wird Monosilan mit Ammoniak NH₃ zur Reaktion gebracht. Die Umsetzung erfolgt in einer Argon-Stickstoff-H₂-Matrix (60 Vol.-%). Der Wasserstoff wird als Wärmeüberträger und als Verdünnungsgas verwendet. Ammoniak wird im molaren Überschuss von etwa 1 : 20 bezogen auf das Monosilan zugegeben. Die Verweilzeit beträgt von 10 bis 700 Millisekunden in einem Rohrreaktor **1** mit einer Länge von 50 cm und einer Temperatur von mindestens 1200°C und einem Rohrreaktor **2** mit der fünffachen Länge des Reaktors **1** und einer Temperatur von mindestens 1500°C. Tabelle 1 zeigt das Temperaturprofil im Reaktor **1.**

**Tabelle 1: Temperaturprofil Reaktor 1 - SiN-Herstellung.**

| Messpunkt | X-Wert (mm) | Temperaturwert ohne Reaktor 2 | Temperaturwert mit anschließendem Reaktor 2 (1500°C) |
|---|---|---|---|
| M1 | -50 | | |
| M2 | 0 | 595 | 645 |
| M3 | 50 | 926 | 1040 |
| M4 | 100 | 1078 | 1090 |
| M5 | 150 | 1149 | 1180 |
| M6 | 200 | 1199 | 1230 |
| M7 | 250 | 1227 | 1236 |
| M8 | 300 | 1239 | 1239 |
| M9 | 350 | 1238 | 1238 |
| M10 | 400 | 1222 | 1239 |
| M11 | 450 | 1186 | 1236 |
| M12 | 500 | 1120 | 1220 |
| M13 | 550 | 929 | 1210 |
| M14 | 600 | 553 | 1200 |
| M15 | 650 | 421 | 1230 |
| M16 | 700 | n.b. | 1357 ... |

Gemäß der theoretischen Reaktionsgleichung

3 SiH₄ + 4 NH₃ → Si₃N₄ + 12 H₂

wird das Zielprodukt Siliciumnitrid erhalten. Das Produkt wird über einen an das Reaktionsrohr angebrachten Konus einem Filter zugeführt, in welchem die Siliumnitridpartikel aufgehalten und isoliert werden können.

Die Partikel haben je nach den konkreten Verfahrensbedingungen (a) Gasmischung 20 NL/Min Stickstoff (N₂), 2,5 Normliter pro Minute (NL/Min) Ammoniak (NH₃), 1,1 NL/Min Argon (Ar) mit 10 Gew.-% Monosilan (SiH₄) unterschiedliche Mikropartikelgrößen, wobei zur Herstellung der Probe die Verweilzeit (a) 100 Millisekunden, (b) 100+400 Millisekunden (=500 ms) in einem Reaktor gemäß **Figur 1** betrug. Entsprechend den Verfahrensbedingungen in a) werden amorphe Submicropartikel mit (d₅₀) 31 bis 38 nm und gemäß (nicht gemäß der Erfindung) b) kristalline Submicropartikel mit (d₅₀) von 30 bis 40 nm erhalten.

Die Absorption der SiN-Partikel Probe mit einer Partikelgröße von ca. 35 nm beträgt im Bereich von 400 bis 1050 nm unter 0,1 rel. Einheiten (UV-Vis-Spektrometer, Partikel dispergiert in Ethanol, 1 mm optische Dicke der Küvette, Einwaage von 300 mg Partikel je Liter Ethanol als Probe) und sinkt ab etwa 500 nm auf unter 0,05 bis auf 0,01 ab etwa 850 nm ab. Beide Partikelgrößen weisen bei Wellenlängen unterhalb von 400 nm eine Absorption von größer gleich 0,5 auf. Angaben zur Absorption im UV-Vis sind relative Einheiten nach Lambert-Beer-Gesetz. Die beschriebenen Siliciumnitrid Submicropartikel sind im Wesentlichen kristallin.

**Ausführungsbeispiel 2a:** Gewinnung von Silicium-Carbid in hochreiner, kristalliner Form in einem Freiraum Reaktor. Es wird Tetreethoxysilan (TEOS) mit CH₄ zur Reaktion gebracht. TEOS und die Kohlenstoffquelle werden in einem molaren Verhältnis etwa 0,8 Si, bspw. als TEOS zu 0,8 C bspw. Methan eingesetzt und auf Normliter/Minute umgerechnet. Gemäß der allgemeinen Reaktionsgleichung

Si(OCH₂CH₃)₄ + CH₄ → SiC + Nebenprodukte

wird Siliciumcarbid erhalten. Das Produkt wird über einen an das Reaktionsrohr angebrachten Konus einem Filter zugeführt, in welchem die Siliumcarbidpartikel aufgehalten werden und isoliert werden können. SiC kristallin (beta) - SiC unterschiedlicher Reinheit wurde bei ca. 1600 °C, Verweilzeit 600 Millisekunden, in H₂-Atmosphäre hergestellt.

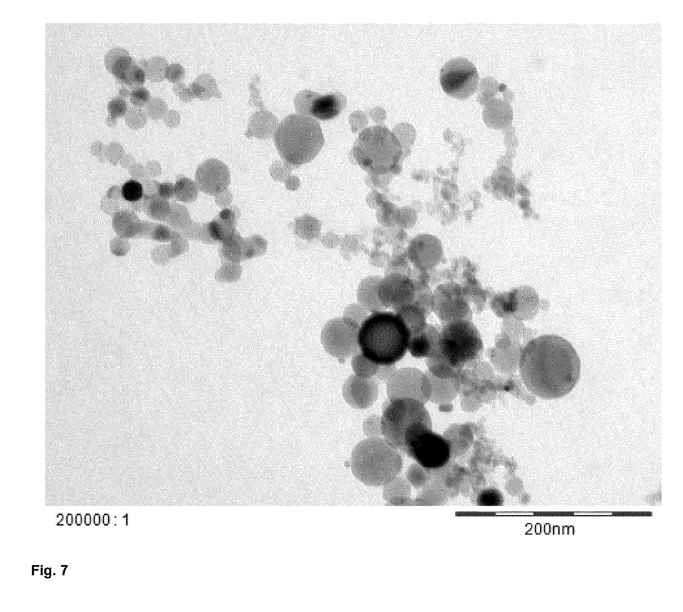

Die mittels TEM analysierten SiC Partikel weisen polyedrischen Habitus auf. Ihre Partikelgröße liegt im Bereich von 10 bis 40 nm, wie aus der **Fig. 7** ersichtlich ist.

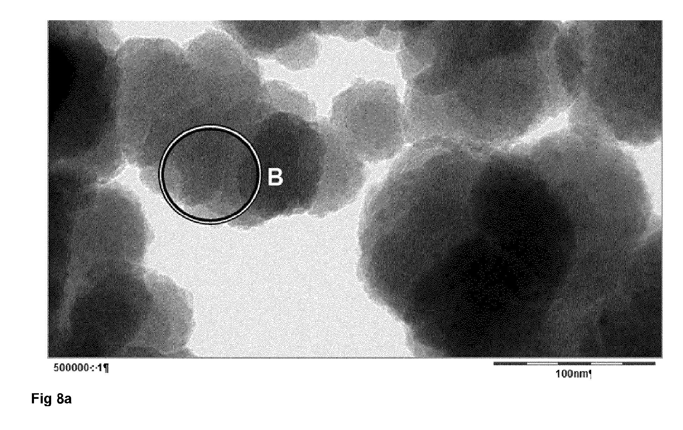

**Ausführungsbeispiel 2b:** Gewinnung von Silicium-Carbid in hochreiner Form in einem Freiraum Reaktor. Es wird Tetraethoxysilan (TEOS) mit CH₄ (das im Plasmavorreaktor zu Acetylen umgesetzt wird) zur Reaktion gebracht. TEOS und die Kohlenstoffquelle werden äquimolar etwa 0,8 : 0,4 in Bezug auf Silicium und Kohlenstoff eingesetzt. Es wird SiC erhalten, das über einen an das Reaktionsrohr angebrachten Konus einem Filter zugeführt wird, in welchem die Siliumcarbidpartikel aufgehalten werden und isoliert werden. (Beta) - SiC unterschiedlicher Reinheit wurde bei ca. 1600 °C, Verweilzeit 150 Millisekunden, in H₂-Atmosphäre hergestellt. Erhalten wurde kristallines SiC (**Figur 8a** (Bereich B), **8b, 8c**).

Die **Figuren 8a** bis **8c** zeigen kristalline Submicropartikel von SiC.

**Ausführungsbeispiel 3:** Das Verfahren wurde analog dem Reaktor aus Ausführungsbeispiel 1 durchgeführt mit der Abweichung, dass für das Ausführungsbeispiel Monosilan mit Ethylen (C₂H₄) zur Reaktion gebracht wird. Die Umsetzung erfolgt in einer Argon-Wasserstoff-Matrix (90 Vol.-%). Der Wasserstoff wird als Wärmeüberträger und als Verdünnungsgas verwendet. Ethylen wird äquimolar bezogen auf das Monosilan zugegeben. Die Verweilzeit beträgt bis 700 Millisekunden in einem Rohrreaktor **1** mit einer Länge von 50 cm und einer Temperatur von mindestens 1100°C und einem zweiten Rohrreaktor **1** mit der fünffachen Länge des üblichen Reaktors **1** und einer Temperatur von mindestens 1500 °C.

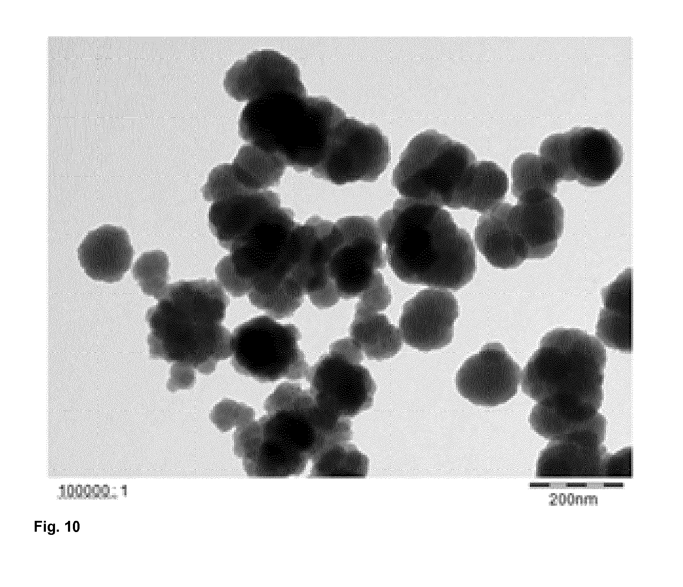

Die Partikel haben je nach den konkreten Verfahrensbedingungen unterschiedliche Submicropartikelgrößen. Eingesetzt wurde eine Gasmischung 35 NL/Min Wasserstoff (H₂), 2,5 Normliter pro Minute (NL/Min) Ethylen (C₂H₄), 5 NL/Min Monosilan (SiH₄) zur Herstellung der Probe, Verweilzeiten: (a) 50 Millisekunden, b) 50+200 Millisekunden (=250 ms) in einem Reaktor gemäß **Figur 1****.** Entsprechend den Verfahrensbedingungen in a) werden nanokristalline SiC/Si Submicropartikel mit (d₅₀) 81 nm erhalten. Die Kristallgröße der SiC-Kristalle liegt bei 2,5 nm (**Fig. 10****:** SiC/Si), und gemäß b) werden nanokristalline SiC/Si Submicropartikel gemäß XRD-Analyse (**Fig.: 11****:** Reflexe/counts: 56-58/ungefähr 1133, 64,5-70,5/ ungefähr 870, 72-73/ ungefähr 540, 76-78/ ungefähr 1650) erhalten.

**Ausführungsbeispiel 4:** Das Verfahren wurde analog dem Ausführungsbeispiel **1b** durchgeführt mit der Abweichung, dass in der Gasphase, an einer in Richtung Ausgang liegenden Einspeisestelle am FSR zusätzlich zu den Komponenten aus Beispiel **1b** eine borhaltige Verbindung, z.B. Diboran eingedüst und im Freiraumreaktor (FSR) thermisch zersetzt wird (siehe **Figur 2**), wodurch eine Silizium-Bor-Legierungs-Shell auf der Siliziumnitrid Partikeloberfläche abgeschieden wird.

**Ausführungsbeispiel 5:** Gewinnung von kristallinem Siliciumcarbid in hochreiner Form in einem Plasma Reaktor. Es wird Monosilan mit Propan zur Reaktion gebracht. Es wurde als Gasgemisch/Prozessgasfluss eingesetzt: 0,7 Normliter/Min Argon und 1 Normliter/Min Monosilan (SiH₄), 0,3 Normliter Propan, 10 Normliter Wasserstoff (H₂). Die Elektroden des Plasma Reaktors haben eine Schlagweite von 4 mm (Gap-Abstand), Betriebsfrequenz des Vorschaltgerätes ca. 11,8 kHz, bipolarer Impuls-Betrieb (Impulse von ca. 500 ns Implusdauer), Amplitude ca. 70 % ( etwa 13 kVp), Betriebsdruck 1040 mbar abs. Energiedichte im Reaktor ca. 400 [W/cm³], Reaktorvolumen rund 0,8 cm³. Das Produkt wird über einen an die Entladungszone angebrachten Konus einem Filter zugeführt, in welchem die Siliumcarbidpartikel aufgehalten und isoliert werden können. Es konnten kristalline Siliciumcarbid Submicropartikel hergestellt werden. Die Partikelgrößen der Submicropartikel liegen bei 1 bis 60 nm.

**Ausführungsbeispiel 6:** Gewinnung von kristallinem Siliciumcarbid in hochreiner Form in einem Plasma Reaktor. Es wird Ethylen mit Monosilan zur Reaktion gebracht. Der Pozessgasfluss umfasst: 2 Normliter/Min Argon mit 3 mol-% Ethylen, 100 ppm-Vol Sauerstoff und 10 ppm-Vol Xenon und 1 Normliter/Min Argon mit 5 mol.-% Monosilan. Die Elektroden des Plasma Reaktors haben eine Schlagweite von 6 mm (Gap-Abstand), Betriebsfrequenz des Vorschaltgerätes ca. 11,8 kHz, bipolarer Impuls-Betrieb (Impulse von ca. 700 ns Implusdauer), Amplitude ca. 90 % (etwa 17 kVp), Betriebsdruck 500 mbar abs. Mit einer Verweilzeit von 3 bis 10 Millisekunden konnten kristalline Siliciumcarbid Submicropartikel hergestellt werden. Die Partikelgrößen der Submicropartikel liegen bei 4 bis 30 nm.

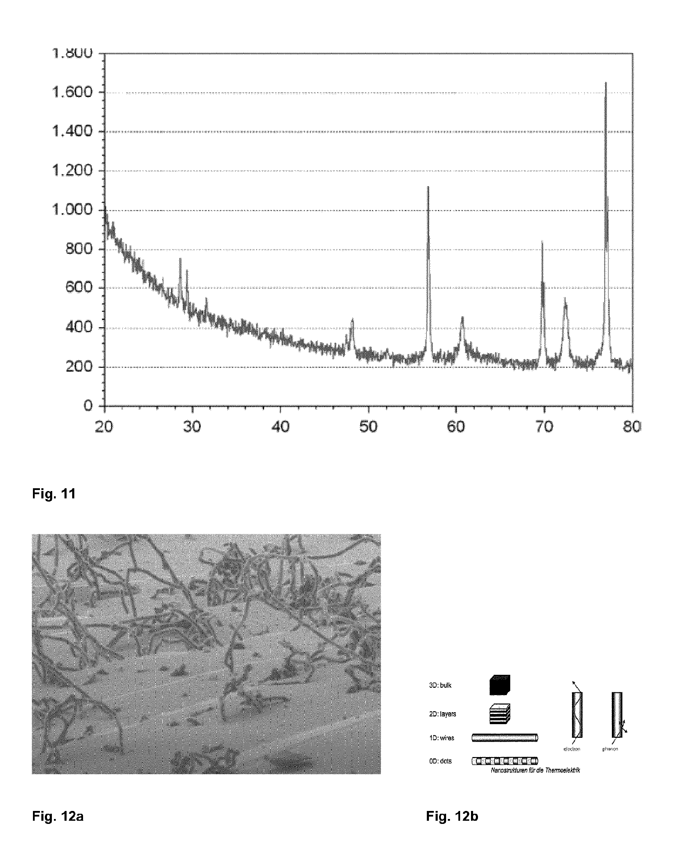

**Ausführungsbeispiel 7:** Die unten genannten Partikel wurden im Heisswandreaktor bei Wandtemperaturen hergestellt: a) XRD Nr. 4 in Fig. 11: bei 1000°C, b) XRD Nr. 1: bei 1100°C, c) XRD Nr. 2: bei 1200°C, d) XRD Nr. 3: bei 1300°C hergestellt. Als Prozessgase wurden im Heisswandreaktor im a) Nr. 4 (kristallin): 2 Normliter SiH₄ und 0,6 Normliter Ammoniak , b) Nr. 1: 2 Normliter SiH₄ und 2 Normliter Ammoniak, c) Nr. 2: 1,1 Normliter SiH₄ und 2,5 Normliter Ammoniak, d) Nr. 3: 0,6 Normliter SiH₄ und 2,5 Normliter Ammoniak hergestellt. Der Stickstoffgehalt wurde bei a) Nr. 4 auf 7.2 Gew.-%, b) Nr. 1: 47.5 Gew.-%, c) Nr. 2: 56.5 Gew.-% sowie bei c) Nr. 3: auf 58 Gew-% bestimmt.

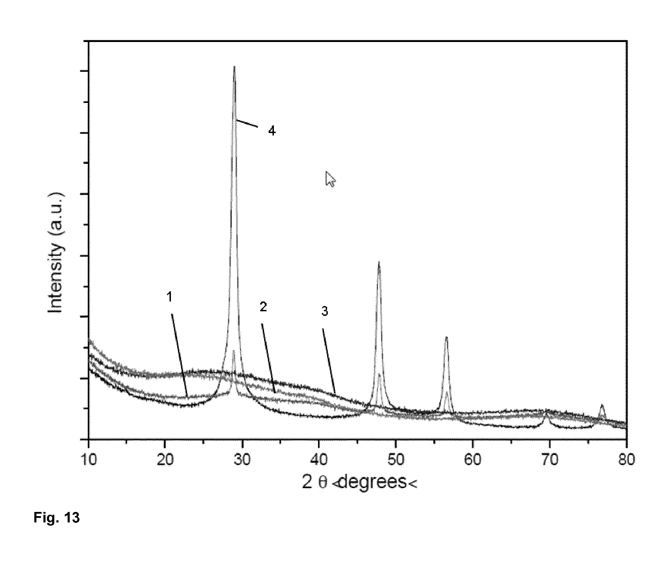

Abbildung XRD von erfinderischem Nano-Si₃N₄/Si gemäß **Figur 13****.**
a) XRP Nr. 4: Si₃N₄/Si 90% Si-Anteil, kristallin,
b) XRD Nr. 1: amorphes Si₃N₄/Si 14 Gew.-% metallisches Si-Anteil, Brechzahl auf 2,3 bestimmt,
c) XRD Nr. 2: amorphes Si₃N₄/Si, kleiner 4 Gew.-% metallisches Si-Anteil Brechzahl ca. 2,1,
d) XRD Nr. 3:: amorphes Si₃N₄/Si, Si-Anteil kleiner metallisches Gew.-1%, Brechzahl rund 2.

Das kristalline Siliziumangereicherte Si₃N₄ - kurz Si₃N₄/Si genannt zeigte nun überraschend eine Anhängigkeit der Wärmeleitfähigkeit vom Anteil der kristallinen MeX-Phase, insbesondere der Si₃N₄/Si-Phase.

Das erfindungsgemäße kristalline, Silizium angereicherte Si₃N₄, kurz Si₃N₄/Si genannt, zeigt überraschend eine Abhängigkeit der Wärmeleitfähigkeit vom Gehalt der Nanokristalle. Im Temperaturbereich zwischen Raumtemperatur (23 °C) und 800°C zeigt das kristalline Si₃N₄/Si (Nr. 4: Si₃N₄/Si 90% kristallin, vgl. oben) eine um 20% verringerte Wärmeleitfähigkeit. Es wird vermutet, dass es sich um sogenannte Core-Shell-Partikel handelt, bei denen der Kern aus einer nanokristallinen Siliziumphase besteht, wobei die Nano-Kristalle ursächlich für die Phononenstreuung sind, die die Wärmeleitung inhibieren. Die Hülle bzw. Schale besteht aus Si₃N₄. Diese Hülle schützt das Partikelsystem und zeichnet sich durch geringe Wärmeausdehnung und besondere chemische Stabilität bei hoher Temperatur aus. Gleichzeitig kann über den Siliziumgehalt der Wärmeleitparameter "eingestellt" werden. Wird die SiN-Shell sehr dünn, dann reduziert sich ferner die Wärmeleitung über den Festkörper erheblich, da die inneren Siliziumnanokristalle die wärme-Phononen streuen und damit den Wärmefluß inhibieren.

**Ausführungsbeispiel 8:** Nach einer erfindungsgemäßen Alternative konnte nanokristallines, Bor-Silizium angereichertes SiC, kurz Si/SiC, erhalten werden, indem SiH₄ mit Diboran und C₂H₂ umgesetzt wurde. Es zeigten sich überraschend fadenförmige Strukturen mit einem Aspektverhältnis im Bereich von 1:10 bis 1:1000. Diese Fäden (Figur 12a) zeigen eine richtungsabhängige Wärmeleitfähigkeit. Figur 12b stell schematisch die Elektronenleitung oder Phononenleitung in 1D-Strukuren dar. Diese Eigenschaft eignet sich besonders für thermoelektrische Anwendungen. Im Temperaturbereich zwischen 300 und 600°C zeigt das erfinderische Material einen ZT von über 0,7 (verbesserte Leitfähigkeit bei inhibierter Wärmeleitfähigkeit). Der Sauerstoffgehalt wurde auf unter 10 ppm bestimmt.

## Patentansprüche

1. Metallverbindungspulver MeX, wobei Me Silicium ist und X ausgewählt ist aus Stickstoff, Kohlenstoff und Germanium,
**dadurch gekennzeichnet,**
**dass** die Metallverbindungspulver Submicropartikel mit einer Partikelgröße von 5 nm bis 3000 nm aufweisen und die Partikel im Wesentlichen kristallin sind. wobei das Metallverbindungspulver eine Kristallinität größer gleich 81% bis größer gleich 99,9 % aufweist.

2. Metallverbindungspulver nach Anspruch 1, **dadurch gekennzeichnet, dass** mindestens ein Submicropartikel eine MeX-Legierung mit größer gleich
10²¹ Atomen/cm³ ausgewählt aus mindestens einem Elektronendonator und Elektronenakzeptor aufweist.

3. Metallverbindungspulver nach Anspruch 1 oder 2, **dadurch gekennzeichnet, dass** die Submicropartikel in Form von Clustern als Macropartikel vorliegen, wobei die Macropartikel eine Partikelgröße von 10 nm bis 3 µm aufweisen.

4. Metallverbindungspulver nach einem der Ansprüche 1 bis 3, **dadurch gekennzeichnet, dass** das Metallverbindungspulver Submicropartikel und optional Macropartikel aufweist,
a) die jeweils unabhängig aus einer MeX-Legierung mit mindestens einem Elektronendonator oder mindestens einem Elektronenakzeptor bestehen, und/oder
b) jeweils unabhängig mindestens eine intrinsische Zone einer MeX-Legierung umfassend einen Elektronendonator, Elektronenakzeptor, eine einen Elektronendonator oder Elektronenakzeptor enthaltenden Verbindung in den Submircopartikeln aufweisen, und/oder
c) jeweils unabhängig mindestens eine Zone einer MeX-Legierung umfassend einen Elektronendonator, Elektronenakzeptor, eine einen Elektronendonator oder Elektronenakzeptor enthaltenden Verbindung als mindestens teilweise Beschichtung der Submicropartikel und/oder Macropartikel aufweisen.

5. Metallverbindungspulver nach einem der Ansprüche 1 bis 4, **dadurch gekennzeichnet, dass** die Metallverbindungspulver umfassend Submicropartikel und optional Macropartikel eine MeX-Legierung mit einem Element der Gruppe 13 oder 15 des Periodensystems der Elemente nach IUPAC aufweisen und/oder zumindest eine Zone einer MeX-Legierung mit einem Element der Gruppe 13 oder 15 aufweisen.

6. Metallverbindungspulver nach einem der Ansprüche 1 bis 5, **dadurch gekennzeichnet, dass**
a) die Submicropartikel aus einer MeX-Borlegierung bestehen, und/oder
b) die Submicropartikel mindestens eine Zone einer MeX-Borlegierung umfassen, insbesondere liegt die Zone als eine zumindest teilweise Beschichtung der Submicropartikel und/oder als mindestens eine intrinsische Zone vor.

7. Metallverbindungspulver nach einem der Ansprüche 1 bis 6, **dadurch gekennzeichnet, dass** das Metallverbindungspulver Silicium-Stickstoff-, Silicium-Kohlenstoff- und/oder Silicium-Germanium-Verbindungen umfasst.

8. Metallverbindungspulver nach einem der Ansprüche 1 bis 7, **dadurch gekennzeichnet, dass** das Metallverbindungspulver thermoelektrische Eigenschaften aufweist.

9. Verfahren zur Herstellung von Metallverbindungspulvern nach einem der Ansprüche 1 bis 8, indem
a) mindestens eine bei erhöhter Temperatur gasförmige Siliciumverbindung,
b) optional in Gegenwart mindestens eines bei erhöhter Temperatur reaktiven Gases oder einer Mischung von reaktiven Gasen, in Gegenwart eines Verdünnungsgases in einer im Wesentlichen sauerstofffreien Atmosphäre unter (i) thermischen Bedingungen und/oder (ii) im Plasma zersetzt wird, und
in Form eines Metallverbindungspulvers MeX, wobei Me Silicium ist und X ausgewählt ist aus Stickstoff, Kohlenstoff und Germanium als Submicropartikel, deren Partikelgröße von 5 nm bis 3000 nm liegt, erhalten wird, wobei die Submicropartikel im Wesentlichen kristallin sind.

10. Verfahren nach Anspruch 9, **dadurch gekennzeichnet, dass** mindestens teilweise die Submicropartikel in Clustern als Macropartikel erhalten werden.

11. Verfahren nach Anspruche 9 oder 10, **dadurch gekennzeichnet, dass** die bei erhöhter Temperatur gasförmige Siliciumverbindung umfasst Wasserstoff- und/oder Halogen-enthaltende Silane und/oder Kohlenwasserstoff-enthaltende Silane, wie Halogensilane, Chlorsilane, wie Dichlorsilan, Trichlorsilan, Tetrachlorsilan, Hexachlordisilan, Methyltrichlorsilan, Polyhalogensilane sowie reine H-Silane wie Monosilan, Wasserstoff enthaltende Polysilane oder Polyhalogensilane, Wasserstoff und Halogen enthaltenden Polysilane und/oder mindestens ein Alkoxysilan.

12. Verfahren nach einem der Ansprüche 9 bis 11, **dadurch gekennzeichnet, dass** das a) Verdünnungsgas Argon, Helium, Xenon, Krypton, Wasserstoff oder ein Gemisch mindestens zwei der genannten Gase umfasst

13. Verfahren nach einem der Ansprüche 9 bis 12, **dadurch gekennzeichnet, dass** das reaktive Gas a) eine Stickstoff enthaltende Verbindungen, wie Stickstoff, NH₃, Alkylamine, Germanium enthaltende Verbindungen, Kohlenwasserstoffe, wie Methan, Butan und/oder Propan umfasst und optional umfasst das mindestens eine reaktive Gas zusätzlich b) Legierungsgase umfassend Verbindungen der Elemente der Gruppe 13 oder 15, insbesondere Bor enthaltende Verbindungen, wie Diboran, bevorzugt Bor, Aluminium, Phosphor, Arsen und/oder Antimon.

14. Metallverbindungspulver erhältlich nach einem Verfahren nach einem der Ansprüche 9 bis 13, **dadurch gekennzeichnet, dass** das Metallverbindungspulver vorzugsweise eine Kristallinität größer gleich 81 % bis größer gleich 99,9 % aufweist, und das Metallverbindungspulver thermoelektrische Eigenschaften aufweist.

15. Reaktor (Freiraum Reaktors) (1) zur Herstellung von Metallverbindungspulvern MeX nach einem der Ansprüche 1 bis 13, wobei Me Silicium ist und X ausgewählt ist aus Silicium, Stickstoff, Kohlenstoff und Germanium mit Partikeln deren Submicropartikelgröße von 10 nm bis 3000 nm liegt, wobei der Reaktor (1) einen Reaktionszylinder (2) mit Reaktionsraum (2.1) umfasst und im Bereich des Reaktoranfangs (2.a, 3) mindestens zwei Zuführungen (4.1, 4.2, 4.3) aufweist für die Einleitung a) der mindestens einen bei erhöhter Temperatur gasförmigen Siliciumverbindung, und b) optional des mindestens eines reaktiven Gases und vorzugsweise eines Legierungsgases und/oder Verdünnungsgases, in den Reaktionsraum (2.1), wobei dem Reaktionsraum (2.1) zumindest in einem Bereich am äußeren Umfang des Reaktionsraumes (2.1) Heizvorrichtungen (7) zugeordnet sind, und/oder dem Reaktionsraum (2.1) mindestens ein Plasmagenerator (9) zugeordnet ist, zur Erzeugung eines Plasmas im Reaktionsraum (2.1), und wobei dem Reaktor (1) mindestens zwei Zuführungen (4, 4.1, 4.2, 4.3) im Bereich des Reaktoranfangs (2.a, 3) zugeordnet sind, wobei die Zuführungen in einem Winkel von größer gleich 30° zueinander angeordnet sind.

16. Verwendung der Metallverbindungspulver nach einem der Ansprüche 1 bis 8 oder erhältlich nach einem Verfahren nach einem der Ansprüche 9 bis 13, zur Herstellung von Thermoelementen, Halbleitern, Halbleitermaterialien, Pasten, Cremes, Kosmetikprodukten, pharmazeutischen Produkten, Silicium enthaltenden Pasten, Elektroden, Membranen, Isoliermaterial, Katalysatoren, von LEDs, Displays, transparenter Schichten, Flat Panel Displays, Schmelztiegeln, Tiegeln, als Ausgangsverbindung zur Kristallisation hochreiner metallischer Silicium-Verbindungen, Beschichtungen, Aerosolen, Materialien für die Thermoelektrik, als Ausgangsverbindung zur Herstellung hochreiner polykristalliner Metallverbindungen oder von Einkristallen der Metallverbindungen, in Hochtemperatur Transistoren, die bei 100 bis 400 °C, vorzugsweise um 300 °C betrieben werden können, zur Herstellung von Hochtemperatursperrschichten, die bei 300 bis 400 °C betrieben werden können, zur Herstellung von Hochtemperaturmembranen, die bei 300 bis 400 °C betrieben werden können, zur Herstellung von Hochtemperaturbauteilen in Batterien, die bei 300 bis 400 °C betrieben werden können, zur Herstellung von Bauteilen, deren Absorption sich bei 300 bis 1000 nm im Wesentlichen linear ändert, insbesondere von Bauteilen, deren Transmission bei etwa 1000 nm 50 % beträgt und bis 450 nm oder bis etwa 300 nm 20 % beträgt und ab 300 nm im Wesentlichen keine Transmission mehr erlaubt, zur Herstellung von OLEDS, oder als Reaktand bei der Herstellung von kristallinem Silicium oder kristallinen Siliciumverbindungen, hochreine Schleifmittel, hochreine Hitzekacheln oder als Material von Artikeln.
